# EUROPEAN PATENT SPECIFICATION

(11) **EP 4 316 178 B1**
(45) Date of publication and mention of the grant of the patent: **14.08.2024**
(21) Application number: 22712096.1
(22) Date of filing: 17.03.2022
(51) Int. Cl.: H04W 76/27

(54) **NETWORK NODES, COMMUNICATION DEVICES AND METHODS FOR HANDLING RESUME PROCEDURE IN A WIRELESS COMMUNICATION NETWORK**
NETZWERKKNOTEN, KOMMUNIKATIONSVORRICHTUNGEN UND VERFAHREN ZUR HANDHABUNG EINES WIEDERAUFNAHMEVERFAHRENS IN EINEM DRAHTLOSKOMMUNIKATIONSNETZWERK
NOEUDS DE RÉSEAU, DISPOSITIFS DE COMMUNICATION ET PROCÉDÉS DE GESTION DE PROCÉDURE DE REPRISE DANS UN RÉSEAU DE COMMUNICATION SANS FIL

(30) Priority: 01.04.2021 US 202163169256 P
(43) Date of publication of application: 07.02.2024
(73) Proprietor: Telefonaktiebolaget LM Ericsson (publ), 164 83 Stockholm (SE)
(72) Inventor: ZOU, Zhenhua, 171 42 Solna (SE); WALLENTIN, Pontus, 582 39 Linköping (SE); WAGER, Stefan, 02360 Espoo (FI); DA SILVA, Icaro Leonardo, 170 77 Solna (SE); BERGQVIST, Jens, 587 37 Linköping (SE)
(74) Representative: Ericsson
(86) International application number: PCT/SE2022/050253
(87) International publication number: WO 2022/211694

(56) References cited:
- WO-A1-2018/228451
- WO-A1-2019/158811
- WO-A1-2020/167170
- US-A1- 2020 288 338

## Description

### TECHNICAL FIELD

Embodiments herein relate to network nodes, communication devices and methods therein. In particular, they relate to handling resume procedure for a communication device operating in dual connectivity with a master cell group (MCG) and a secondary cell group (SCG) in a wireless communication network.

### BACKGROUND

In a typical wireless communication network, wireless devices, also known as wireless communication devices, mobile stations, stations (STA) and/or user equipments (UE), communicate via a Radio Access Network (RAN) to one or more core networks (CN). The RAN covers a geographical area which is divided into service areas or cell areas, which may also be referred to as a beam or a beam group, with each service area or cell area being served by a radio network node such as a radio access node e.g., a Wi-Fi access point or a radio base station (RBS), which in some networks may also be denoted, for example, a "NodeB" or "eNodeB" or "gNB". A service area or cell area is a geographical area where radio coverage is provided by the radio network node. The radio network node communicates over an air interface operating on radio frequencies with the wireless communication device within a range of the radio network node.

A Universal Mobile Telecommunications System (UMTS) is a third generation (3G) telecommunication network, which evolved from the second generation (2G) Global System for Mobile Communications (GSM). Specifications for the Evolved Packet System (EPS), also called a Fourth Generation (4G) network or Long Term Evolution (LTE) have been completed within the 3rd Generation Partnership Project (3GPP) and this work continues in the coming 3GPP releases, for example to specify a Fifth Generation (5G) New Radio (NR) network and upcoming releases.

### Carrier Aggregation (CA):

CA is used in wireless communication in order to increase bandwidth, and thereby increase the data rate per user, whereby multiple frequency blocks, called component carriers, are assigned to the same user. When CA is configured, the UE only has one Radio Resource Control (RRC) connection with the network node. Further, at RRC connection establishment/re-establishment/handover, one serving cell provides the Non Access Stratum (NAS) mobility information, and at RRC connection reestablishment/handover, one serving cell provides the security input. This cell is referred to as the Primary Cell (PCell). In addition, depending on UE capabilities, Secondary Cells (SCells) can be configured to form together with the PCell a set of serving cells. Therefore, when carrier aggregation is configured for the UE, the set of serving cells used by the UE always consists of one PCell and one or more SCells.

The reconfiguration, addition and removal of SCells can be performed by RRC. At intra-Radio Access Technology (intra-RAT) handover, RRC can also add, remove, or reconfigure SCells for usage with the target PCell. When adding a new SCell, dedicated RRC signalling is used for sending all required system information of the SCell i.e. while in connected mode, UEs need not acquire broadcasted system information directly from the SCells.

### 3GPP Dual Connectivity:

In 3GPP Rel-12, the LTE feature Dual Connectivity (DC) was introduced, to enable the UE to be connected in two cell groups, each controlled by an LTE access node, eNBs, labelled as the Master eNB (MeNB) and the Secondary eNB (SeNB). The UE still only has one RRC connection with the network node. In 3GPP, the Dual Connectivity (DC) solution has since then been evolved and is now also specified for NR as well as between LTE and NR. With introduction of 5G, the term Multi-Radio Dual Connectivity (MR-DC), see also 3GPP TS 37.340, was defined as a generic term for all dual connectivity options which includes at least one NR access node. Using the MR-DC generalized terminology, the UE is connected in a Master Cell Group (MCG), controlled by the Master Node (MN), and in a Secondary Cell Group (SCG) controlled by a Secondary Node (SN).

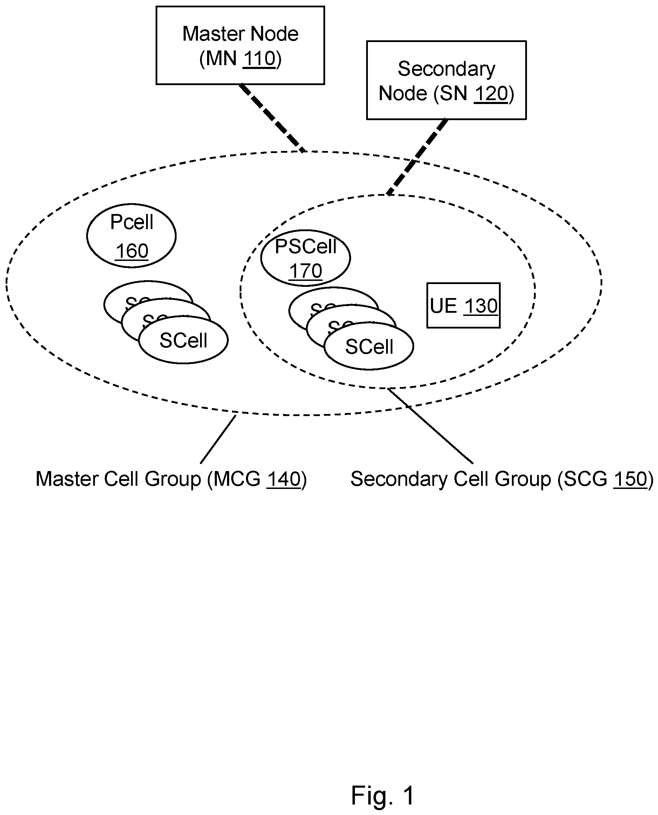

Further, in MR-DC, when dual connectivity is configured for the UE, within each of the two cell groups, MCG and SCG, carrier aggregation may be used as well. In this case, within the MCG, controlled by the master node (MN), the UE may use one PCell and one or more SCell(s). And within the SCG, controlled by the secondary node (SN), the UE may use one Primary SCell (PSCell), also known as the primary SCG cell in NR, and one or more SCell(s). This combined case, i.e. dual connectivity combined with carrier aggregation in MR-DC, is illustrated in **Figure 1****,** where a **MN 110,** a **SN 120,** a **UE 130, MCG 140, SCG 150, a PCell 160** in MCG 140, a **PSCell 170** in the SCG 150, and multiple **SCells** are shown. In NR, the primary cell of a master or secondary cell group is sometimes also referred to as the Special Cell (SpCell). Hence, the SpCell in the MCG is the PCell and the SpCell in the SCG is the PSCell.

There are different ways to deploy 5G network with or without interworking with LTE, also referred to as E-UTRA and evolved packet core (EPC). In principle, NR and LTE can be deployed without any interworking, denoted by NR stand-alone (SA) operation, also known as Option 2, that is gNB in NR can be connected to 5G core network (5GC) and eNB in LTE can be connected to EPC with no interconnection between the two, also known as Option 1.

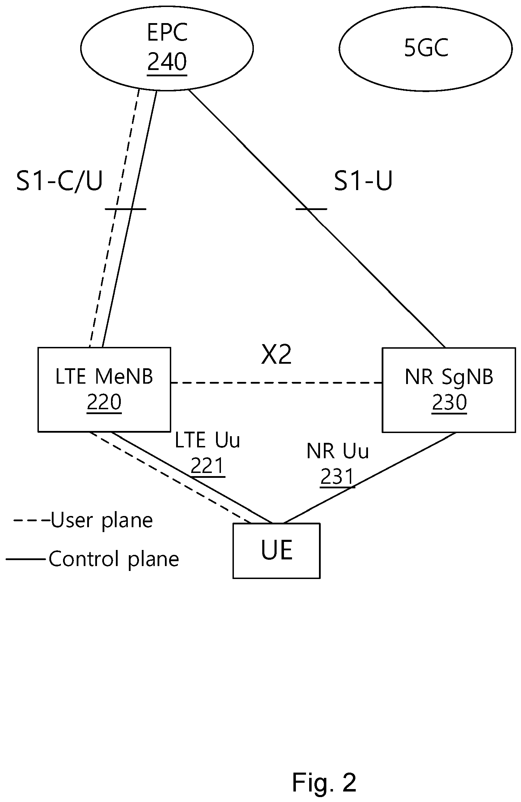

On the other hand, the first supported version of NR uses dual connectivity, denoted as EN-DC (E-UTRAN-NR Dual Connectivity), also known as Option 3, as depicted in **Figure 2****.** In such a deployment, dual connectivity between NR and LTE is applied, where a **UE 210** is connected both to an LTE access node **LTE MeNB 220** with the LTE radio interface **LTE Uu 221** and to an NR access node **NR SgNB 230** with the NR radio interface **NR Uu 231.** Further, in EN-DC, the LTE access node acts as the master node, in this case known as the Master eNB (MeNB), controlling the master cell group (MCG), and the NR access node acts as the secondary node, in this case sometimes also known as the Secondary gNB (SgNB), controlling the secondary cell group (SCG). The SgNB may not have a control plane connection to the core network **EPC 240** which instead is provided by MeNB and in this case the NR. This is also called as "Non-standalone NR" or, in short, "NSA NR". Notice that in this case the functionality of an NR cell is limited and would be used for connected mode UEs as a booster and/or diversity leg, but an UE in RRC_IDLE state in which the UE is switched on but does not have any established RRC connection, cannot camp on these NR cells.

With introduction of 5GC, other options may be also valid. As mentioned above, option 2 supports stand-alone NR deployment where gNB is connected to 5GC. Similarly, LTE can also be connected to 5GC using option 5, also known as eLTE, E-UTRA/5GC, or LTE/5GC and the node can be referred to as an ng-eNB. In these cases, both NR and LTE are seen as part of the NG-RAN and both the ng-eNB and the gNB can be referred to as NG-RAN nodes.

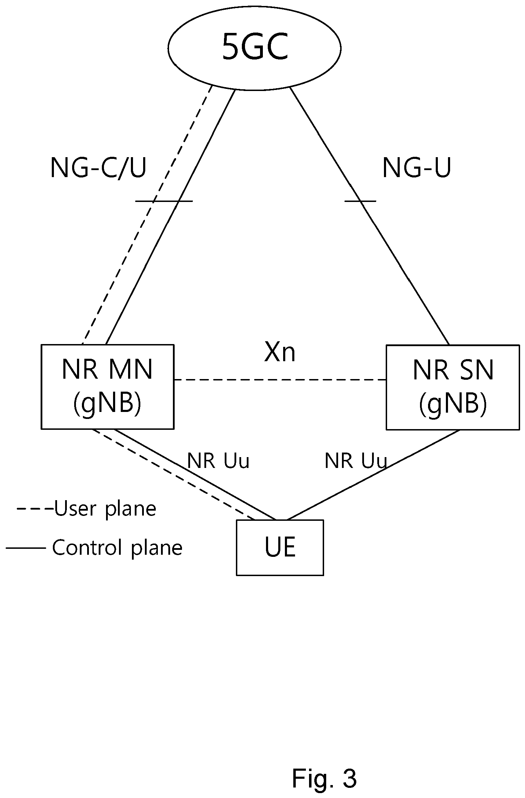

It is worth noting that, there are also other variants of dual connectivity between LTE and NR which have been standardized as part of NG-RAN connected to 5GC. Under the MR-DC umbrella, we have:
- EN-DC (Option 3): LTE is the master node and NR is the secondary node (EPC CN employed, as depicted in Figure 2).
- NE-DC (Option 4): NR is the master node and LTE is the secondary (5GCN employed).
- NGEN-DC (Option 7): LTE is the master node and NR is the secondary (5GCN employed).
- NR-DC (variant of Option 2): Dual connectivity where both the master node (MN) controlling the MCG, and the secondary node (SN) controlling the SCG, are NR (5GCN employed, as depicted in **Figure 3**).

As migration for these options may differ from different operators, it is possible to have deployments with multiple options in parallel in the same network e.g. there could be eNB base station supporting option 3, 5 and 7 in the same network as NR base station supporting 2 and 4. In combination with dual connectivity solutions between LTE and NR it is also possible to support CA (Carrier Aggregation) in each cell group, i.e. MCG and SCG and dual connectivity between nodes on same RAT, e.g. NR-NR DC. For the LTE cells, a consequence of these different deployments is the co-existence of LTE cells associated to eNBs connected to EPC, 5GC or both EPC and 5GC.

As said earlier, DC is standardized for both LTE and E-UTRA -NR DC (EN-DC).

LTE DC and EN-DC are designed differently when it comes to which nodes control what. Basically, there are two options:
1) Centralized solution, like LTE-DC,
2) Decentralized solution, like EN-DC.

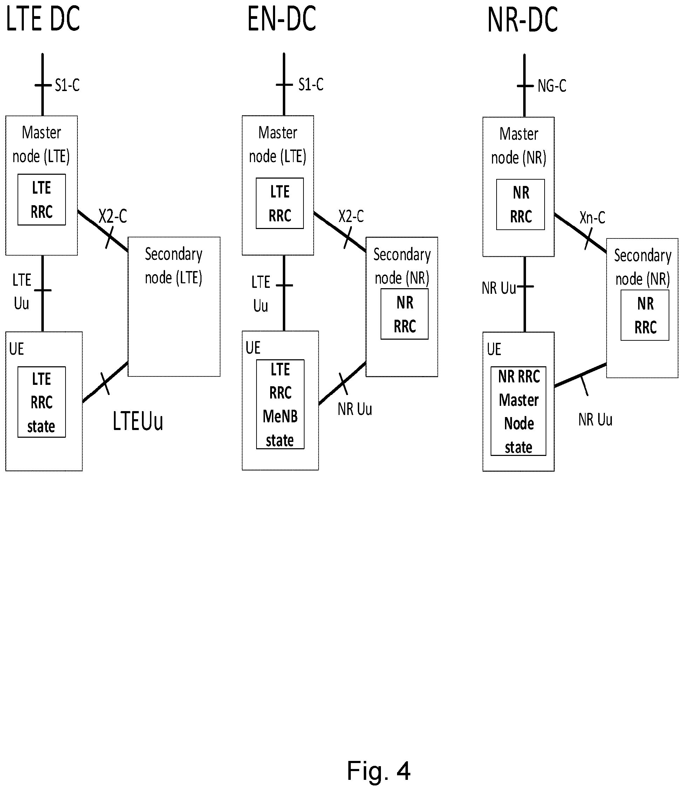

**Figure 4** shows the schematic control plane architecture looks like for LTE DC, EN-DC and NR-DC. The main difference here is that in EN-DC and NR-DC, the SN has a separate NR RRC entity. This means that the SN can control the UE also; sometimes without the knowledge of the MN but often the SN need to coordinate with the MN. In LTE-DC, the RRC decisions are always coming from the MN, i.e. MN to UE. Note however, the SN still decides the configuration of the SN, since it is only the SN itself that has knowledge of what kind of resources, capabilities etc. it has.

For EN-DC and NR-DC, the major changes compared to LTE DC are:
- The introduction of split data radio bearer (DRB) from the SN (known as SN terminated split DRB).
- The introduction of split signaling radio bearer (SRB) for RRC.
- The introduction of a direct SRB from the SN (also referred to as SCG SRB or SRB3).

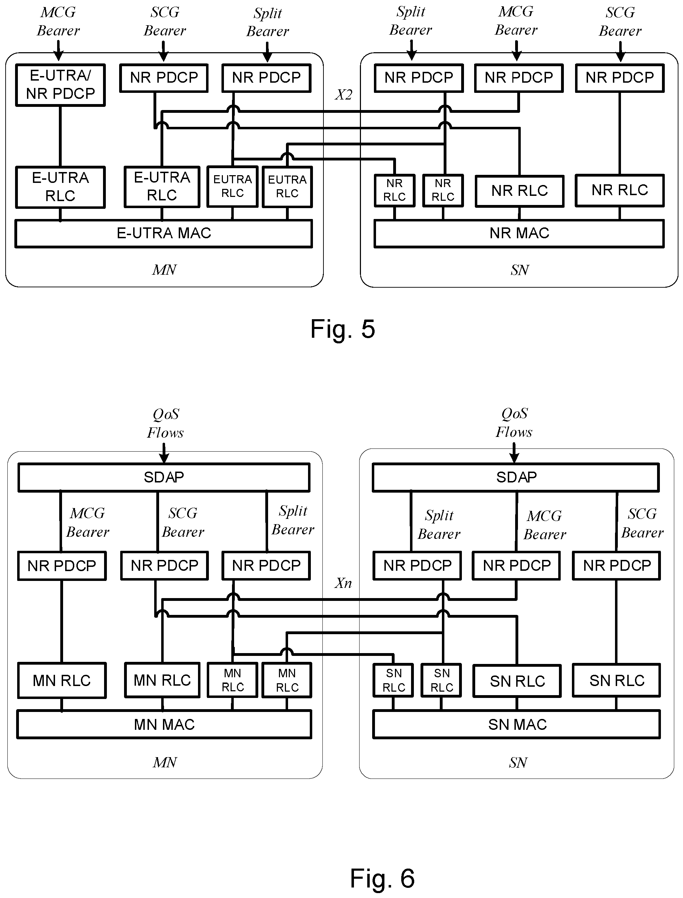

**Figure 5** shows, from network node perspective, the user plane protocol architecture in MR-DC with EPC (EN-DC). In this case, the network node can configure either E-UTRA Packet Data Convergence Protocol (PDCP) or NR PDCP for MN terminated MCG DRBs while NR PDCP is always used for all other DRBs.

**Figure 6** shows, from network node perspective, the user plane protocol architecture in MR-DC with 5GC (NGEN-DC, NE-DC and NR-DC). In MR-DC with 5GC, NR PDCP is always used for all Data Radio Bearer (DRB) types. In NGEN-DC, E-UTRA Radio Link Control/Medium Access Control (RLC/MAC) is used in the MN while NR RLC/MAC is used in the SN. In NE-DC, NR RLC/MAC is used in the MN while E-UTRA RLC/MAC is used in the SN. In NR-DC, NR RLC/MAC is used in both MN and SN.

### Packet duplication:

Packet data convergence protocol (PDCP) packet duplication, also known as Packet Duplication or PDCP duplication, is a feature that can be used to support ultra-reliable low latency (URLLC) use-cases.

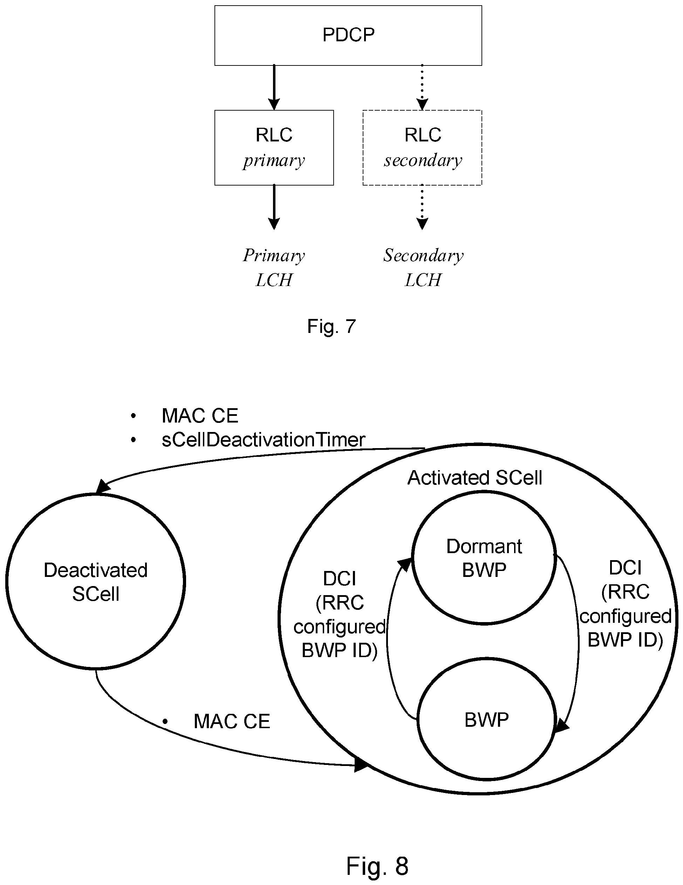

PDCP duplication is configurable in both carrier aggregation (CA) as well as dual connectivity (DC),
According to 3GPP TS 38.300 v16.1, and depicted in **Figure 7****,** when duplication is configured for a radio bearer by RRC, at least one secondary RLC entity is added to the radio bearer to handle the duplicated PDCP Protocol Data Units (PDUs), where the logical channel corresponding to the primary Radio link control (RLC) entity is referred to as the primary logical channel, and the logical channel corresponding to the secondary RLC entity(ies), the secondary logical channel(s).

Duplication at PDCP therefore consists in submitting the same PDCP PDUs multiple times: once to each activated RLC entity for the radio bearer. The packet duplicates are transmitted via the different carriers (cells). With multiple independent transmission paths, packet duplication therefore increases reliability and reduces latency and is especially beneficial for URLLC services.

When configuring duplication for a DRB, RRC also sets the state of PDCP duplication, either activated or deactivated, at the time of configuration or reconfiguration. After the configuration, the PDCP duplication state can then be dynamically controlled by means of a MAC control element and in DC, the UE applies the MAC CE commands regardless of their origin, MCG or SCG.

### SCG power saving mode:

In order to improve network energy efficiency and UE battery life for UEs in MR-DC, a Rel-17 work item is planned to introduce efficient SCG/SCell activation/deactivation. This can be especially important for MR-DC configurations with NR SCG, as it has been evaluated in 3GPP contribution document RP-190919 that in some cases NR UE power consumption is 3 to 4 times higher than LTE.

3GPP has specified the concepts of dormant SCell (in LTE) and dormancy like behavior of an SCell (for NR).

In LTE, when an SCell is in dormant state, like in the deactivate state, the UE does not need to monitor the corresponding Physical Downlink Control Channel (PDCCH) or PDSCH and cannot transmit in the corresponding uplink. However, differently from deactivated state, the UE is required to perform and report Channel Quality Indicator (CQI) measurements. A PUCCH SCell, i.e. SCell configured with PUCCH, cannot be in dormant state.

In NR, dormancy like behaviour for SCells is realized using the concept of dormant Bandwidth Parts (BWPs). See **Figure 8****,** an Illustration of dormancy like behavior for SCells in NR. One dormant BWP, which is one of the dedicated BWPs configured by the network node via RRC signaling, can be configured for an SCell. If the active BWP of the activated SCell is a dormant BWP, the UE stops monitoring PDCCH on the SCell but continues performing Channel State Information (CSI) measurements, Automatic Gain Control (AGC) and beam management, if configured. A Downlink Control Information (DCI) is used to control entering/leaving the dormant BWP for one or more SCell(s) or one or more SCell group(s), and it is sent to the special cell (SpCell) of the cell group that the SCell belongs to, i.e. PCell in case the SCell belongs to the MCG and PSCell if the SCell belongs to the SCG. The SpCell, i.e. PCell of PSCell, and PUCCH SCell cannot be configured with a dormant BWP.

However, only SCells can be put in dormant state (in LTE) or operate in dormancy like behavior (NR). Also, only SCells can be put into the deactivated state in both LTE and NR. Thus, if the UE is configured with MR-DC, it is not possible to fully benefit from the power saving options of dormant state or dormancy like behavior as the PSCell cannot be configured with that feature. Instead, an existing solution could be releasing for power savings and adding when traffic demands requires the SCG on a need basis. However, traffic is likely to be bursty, and adding and releasing the SCG involves a significant amount of RRC signaling and inter-node messaging between the MN and the SN, which causes considerable delay.

In 3GPP rel-16, some discussions were made regarding putting also the PSCell in dormancy, also referred to as SCG Suspension. Some preliminary agreements were made in RAN2-107bis, Oct 2019 (see chairman notes at R2-1914301):
R2-1914301 assumes the following (can be slightly modified due to progress on Scell dormancy):
=> The UE supports network-controlled suspension of the SCG in RRC_CONNECTED.
=> UE behavior for a suspended SCG is FFS
=> The UE supports at most one SCG configuration, suspended or not suspended, in Rel16.
=> In RRC_CONNECTED upon addition of the SCG, the SCG can be either suspended or not suspended by configuration.

In RAN2-108, further discussion was made to clarify the above for further studies (FFSs).

Some solutions have been proposed in Rel-16, but these have different problems. For example, in R2-1908679 (Introducing suspension of SCG - Qualcomm) the paper proposes that gNB can indicate UE to suspend SCG transmissions when no data traffic is expected to be sent in SCG so that UE keeps the SCG configuration but does not use it for power saving purpose. Therein, it is mentioned that signaling to suspend SCG could be based on DCI/MAC-CE/RRC signaling, but no details were provided regarding the configuration from the gNB to the UE. And, differently from the defined behavior for SCell(s), PSCell(s) may be associated to a different network node, e.g. a gNodeB operating as Secondary Node.

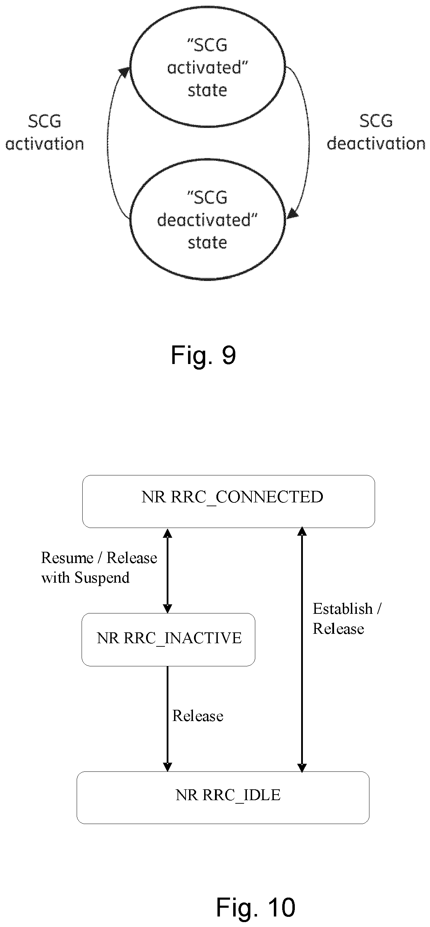

The 3GPP discussions on solutions for the Rel-17 MR-DC work item objective "Support efficient activation/de-activation mechanism for one SCG and Scells" have just started in 3GPP RAN1, RAN2 and RAN3. As part of this objective, the concept of a "deactivated SCG" with aim of power saving when the traffic demands are dynamically reduced is being discussed. As **Figure 9** also illustrates, there are two SCG states, sometimes referred to as states for SCG activation, being discussed, here referred to as "SCG deactivated state" and "SCG activated state". These states concern the power saving mode for the SCG and should not be confused with the RRC states.

Current RAN2 assumption is that during "SCG deactivated state" or sometimes referred to as "SCG is deactivated", in order to save power, the UE does not perform PDCCH monitoring of the PSCell. This also means that Uplink/Downlink (UL/DL) data transmission in the SCG is suspended when the SCG is in SCG deactivated state. Activation and deactivation of the SCG is typically controlled by the network node, e.g. by the MN, using RRC signalling. Moreover, RAN2 has agreed that PSCell mobility is supported while the SCG is deactivated, even if details are for further studies (FFS). When the UE is configured with the SCG in "SCG activated state" the power saving of the SCG is not applied.

RRC_INACTIVE and Suspend/ Resume procedures:
**Figure 10** Illustrates the RRC states in NR specified in 3GPP TS 38.331 v16.2.0.

A UE is either in RRC_CONNECTED state or in RRC_INACTIVE state, the latter is also known as suspended state, when an RRC connection has been established. If this is not the case, i.e. no RRC connection is established, the UE is in RRC_IDLE state.

When the UE in RRC_CONNECTED state receives an RRC Release with a suspend configuration (*suspendConfig in RRCRelease*) the UE transitions to RRC_INACTIVE state and stores its configuration in the so called AS Inactive context. Then, when the UE tries to resume the configuration is restored so that network node is able to apply delta signaling in the *RRCResume* message during a resume procedure.

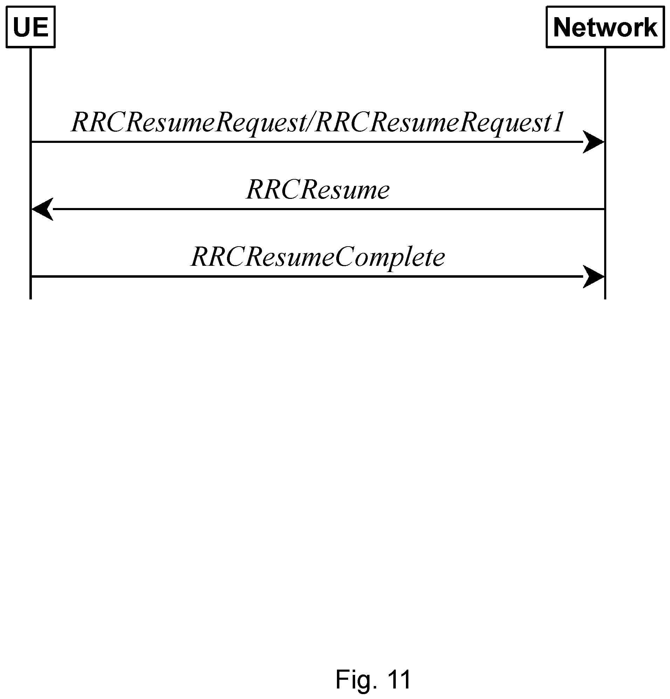

**Figure 11** illustrates the RRC procedure to resume a suspended RRC connection. The details of this procedure are specified in 3GPP TS 38.331 v16.2.0.

In the particular case the RRC_CONNECTED UE is configured with MR-DC, e.g. has a configured SCG, there are some differences in suspend/resume procedures in 3GPP Release 15 and Release 16.

The network node may determine to suspend an RRC connection for a UE operating in MR-DC, e.g. configured with a Secondary Cell Group (SCG) and with a Master Cell Group (MCG), so the UE transitions from RRC_CONNETED to RRC_INACTIVE. In Rel-15, it was defined that the UE releases MR-DC configurations upon entering RRC_INACTIVE (though it was rather modeled as an MR-DC release upon the initiation to resume defined in TS 38.331, 5.3.13.2), see section 5.3.8.3 Reception of the RRCRelease by the UE, section 5.3.13 RRC connection resume and section 5.3.5.10 MR-DC release in Rel-15 for detail information.

In Rel-16 an enhancement was introduced: for a UE operating in MR-DC, e.g. EN-DC, NR-DC, that is suspended to RRC_INACTIVE, the UE stores the SCG configurations, at least some of the configurations, so that these can be restored and resumed upon resume procedure. Among the changes introduced in 5.3.8.3, the UE in Rel-16 stores the *spCellConfigCommon* within *ReconfigurationWithSync* of the NR PSCell (if configured).

Another change introduced in resume initiation in Rel-16 for this feature was that the UE only releases MR-DC if it does not support maintaining SCG configuration upon connection resumption. And, when the UE restores the context it restores the MR-DC configuration, including the SCG configuration (as defined up to Rel-16).

Yet another change is that *RRCResume* can include the field *mrdc-SecondaryCellGroup* possibly set to *nr-SCG,* so that an *SCG RRC Reconfiguration* can include the reconfiguration with sync for the SCG to be resumed (or added/ modified). This is needed for the UE to trigger a random access procedure with the PSCell that is being resumed. See section 5.3.8.3 Reception of the RRCRelease by the UE and section 5.3.13 RRC connection resume comprising section 5.3.13.1 General, 5.3.13.2 Initiation, section 5.3.13.3 Actions related to transmission of *RRCResumeRequest*or *RRCResumeRequest1* message and section 5.3.13.4 Reception of the *RRCResume* by the UE in Rel-16 for detail information.

With the introduction in 3GPP Rel-17 of the SCG power saving mode, often called in 3GPP "deactivated SCG" or "SCG deactivated state", as described above, the network node may still determine to suspend the UE to RRC_INACTIVE while the SCG is deactivated. Upon suspension, i.e. reception of an *RRCRelease* with *suspendConfig,* if the SCG is activated the same behavior as in Rel-16 could be adopted, as to some extent, in Rel-16 the SCG is always activated when an SCG is configured. With the introduction of the Rel-17 feature, the SCG may be deactivated when the UE receives an *RRCRelease* with *suspendConfig* and transitions to RRC_INACTIVE. And, regardless if the UE was suspended when it was configured with multi-radio dual connectivity (MR-DC) including a Master Cell Group (MCG) and a Secondary Cell Group (SCG), when the UE resumes from RRC_INACTIVE to RRC_CONNECTED it has been agreed in 3GPP RAN2 that the SCG state, e.g. SCG activated state or SCG deactivated state, can be configured at RRC resume. In legacy, when the UE resumes e.g. due to the fact there is some uplink traffic, NAS layer trigger the resume procedure and a cause value mo-Data is set to be included in RRC Resume Request message, as follows:

### 5.3.13 RRC connection resume

### 5.3.13.1 General

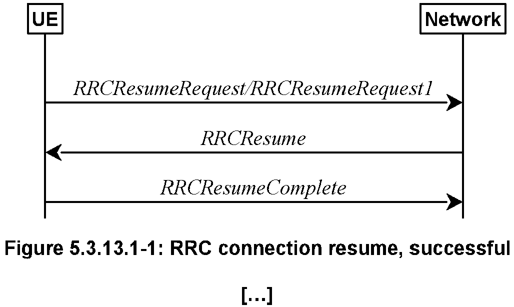

The purpose of this procedure is to resume a suspended RRC connection, including resuming SRB(s) and DRB(s) or perform an RNA update.

[...]

### 5.3.13.2 Initiation

The UE initiates the procedure when upper layers or AS (when responding to RAN paging, upon triggering RNA updates while the UE is in RRC_INACTIVE, or for sidelink communication as specified in sub-clause 5.3.13.1a) requests the resume of a suspended RRC connection.

The UE shall ensure having valid and up to date essential system information as specified in clause 5.2.2.2 before initiating this procedure.

Upon initiation of the procedure, the UE shall:
1> if the resumption of the RRC connection is triggered by response to NG-RAN paging:
   2> select '0' as the Access Category;
   2> perform the unified access control procedure as specified in 5.3.14 using the selected Access Category and one or more Access Identities provided by upper layers;
      3> if the access attempt is barred, the procedure ends;
1> else if the resumption of the RRC connection is triggered by upper layers:
   2> if the upper layers provide an Access Category and one or more Access Identities:
      3> perform the unified access control procedure as specified in 5.3.14 using the Access Category and Access Identities provided by upper layers;
         4> if the access attempt is barred, the procedure ends;
   2> set the *resumeCause* in accordance with the information received from upper layers;

[...]

### RRCResumeRequest message

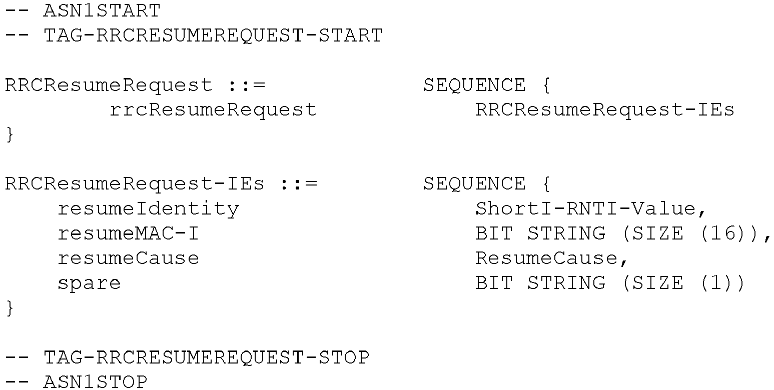

| ***RRCResumeRequest-IEs* field descriptions** |
|---|
| ***resumeCause*** |
| Provides the resume cause for the RRC connection resume request as provided by the upper layers or RRC. |
| The network is not expected to reject an *RRCResumeRequest* due to unknown cause value being used by the UE. |

| ***resumeldentity*** |
|---|
| UE identity to facilitate UE context retrieval at gNB. |

| ***resumeMAC-1*** |
|---|
| Authentication token to facilitate UE authentication at gNB. The 16 least significant bits of the MAC-I calculated using the AS security configuration as specified in 5.3.13.3. |

[...]

### - ResumeCause

The IE *ResumeCause* is used to indicate the resume cause in *RRCResumeRequest* and *RRCResumeRequest1.*

### ResumeCause information element

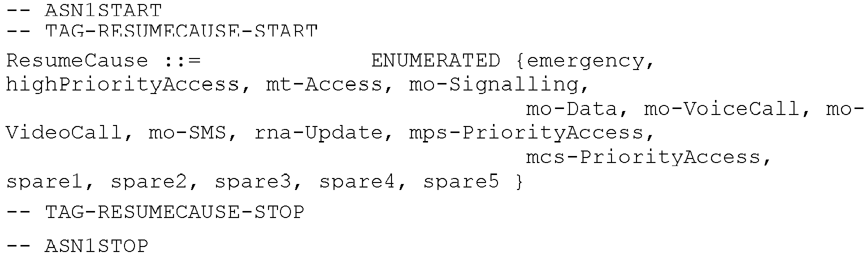

In the following, the terms "suspended SCG", "SCG in power saving mode", "SCG deactivated state", or "deactivated SCG" are used interchangeably. The term "suspended SCG" may also be called as "deactivated SCG or inactive SCG", or "dormant SCG". The terms "resumed SCG", "SCG in normal operating mode", "SCG activated state" and "SCG in non-power saving mode" are used interchangeably. The terms "resumed SCG" may also be called as "activated SCG" or "active SCG". The operation of the SCG operating in resumed or active mode may also be called as normal SCG operation or legacy SCG operation. Examples of operations are UE signal reception/transmission procedures e.g. reception of signals messages, transmission of signals messages, etc. The terms "communication device" and "UE" are used interchangeably. The term "network node", "gNB", "eNB", "gNodeB are used interchangeably. The patent application publication US2020/288338 shows a method in which a device in a power saving mode that is configured for dual connectivity resumes to the active state and selects which cell will be used for further transmissions.

### SUMMARY

As part of developing embodiments herein problems were identified and will first be discussed.

Even though upon reception the network node knows that the UE requested the resume procedure due to the need to have UL transmission, during RRC resume of the UE, the network node is not aware whether the UE initiated RRC resume request was triggered due to uplink data for a MCG DRB or for an SCG DRB. As a matter of fact, that remains unknown even after context fetching, which enables the network node, e.g. the target network node where the UE is trying to resume, to at least know whether the UE was configured with an SCG or split DRB.

This means that the network node would not be aware of which SCG state or mode of operation to select, e.g. SCG activated state or SCG deactivated state, for the UE performing RRC resume procedure. Hence, the network node, e.g. target gNodeB where the UE tries to resume, may activate the SCG unnecessarily, in case UL data that triggered the resume request is associated to the MCG or the amount of data is not sufficient to justify activating the SCG. When the network node realizes that sub-optimal decision, the network node would have to transmit another message to the UE after the resume procedure, e.g. an *RRCReconfiguration* and/or a *MAC CE,* to deactivate the SCG for power savings purpose. During the time the UE has resumed until the time the UE receives this message, more power is consumed and more signaling is used after resume. Alternatively, the network node, e.g. target gNodeB where the UE tries to resume, may deactivate the SCG even though the UE has UL data associated to the SCG. In that case the network node would then have to transmit another message to activate the SCG after the RRC resume procedure once it realizes that there is data associated to the SCG that justifies activation of the SCG. During the time the UE has resumed until the time the UE receives this message, the performance would then be restricted due to that only the MCG can be used.

In order to resume a stored SCG as part of the RRC Resume procedure, i.e. already with the RRC Resume message or shortly thereafter, the network node has to do it more or less blindly. This is since the network node has then not received any new measurement results from the UE for the SCG (PSCell) that it can use to determine if the UE is in radio coverage of the SCG/PSCell. There is then a risk that the UE is configured with the SCG even if it is out-of-coverage of the previous SCG/PSCell.

Therefore, it is an object of embodiments herein to provide an improved method for handling a resume procedure for a communication device operating in dual connectivity with a master cell group (MCG) and a secondary cell group (SCG) of a network node in a wireless communication network.

According to one aspect of the embodiments herein, the object is achieved by a method performed in a communication device for handling a resume procedure from a suspended state to a connected state. The communication device is configured with multi-radio connectivity (MR-DC) with a Master Cell Group (MCG) and a Secondary Cell Group (SCG). The communication device initiates a resume procedure when there is uplink data available. The communication device determines the type of the UL data, i.e. whether the UL data is available for an MCG bearer, an SCG bearer or a split bearer. The communication device sets an UL data indication based on the determination of whether the UL data is available for an MCG bearer, an SCG bearer or a split bearer. The communication device sends the UL data indication to a network node. The UL data indication indicates whether the resume is initiated due to uplink data that is available only for the MCG, or, regardless data is available for MCG, due to uplink data is available for SCG. The UL data indication may be in an information element in the *RRC Resume Complete* message if not included in a previous message in the resume procedure.

In other words, the communication device sends to a network node upon resuming from the suspended state such as RRC_INACTIVE state to the connected state such as RRC_CONNECTED state, an UL data indication for assisting the network node to determine a SCG configuration for the communication device. When the UL data is available, the resume from a suspended state is performed, the communication device determines whether the UL data is for an MCG, SCG or split DRB and sets the UL data indication based on this determination and possibly other criteria such as a data volume threshold.

The embodiments herein enable the communication device to unequivocally transmit an indication if there is any UL data that needs to be transmitted via the SCG, in the case that one or more than one bearer type has UL data during the resume procedure. In one embodiment, the communication device checks the bearer type with a given priority order, such as the SCG bearer and the split bearer is checked first, so that the indication that SCG has data to transmit is triggered first in the procedure. If uplink data is available for the SCG, the communication device transmits an indication in a message, e.g. *RRCResumeRequest* message, which may trigger the network node to activate SCG during resume procedure. Otherwise, the communication device transmits an indication that only bearers on the MCG side have data to transmit, which may trigger the network node not to activate SCG during resume procedure.

In another embodiment, the UL data indication of SCG may be additionally added in the *RRCResumeComplete* message if there are further UL data arrival to transmit via SCG between sending RRCResumeRequest message and sending RRCResumeComplete message. The network node may activate the SCG in a separate message that is not part of the resume procedure.

According to one aspect of the embodiments herein, the object is achieved by a method performed in a network node, such as a gNB, to determine a SCG configuration upon a communication device initiating a resume procedure from a suspended state such as RRC_INACTIVE state to a connected state such as RRC_CONNECTED state, based on an UL data indication, SCG coverage indication or a measurement report received from the communication device. The network node is configured to:
Determine whether a suspend SCG is to be resumed and, if it is to be resumed, which mode of operation should be set to the SCG e.g. deactivated or activated;
Determine whether an SCG is to be released in case the communication device trying to resume is configured with an SCG;
Determine whether an SCG is to be added in case the communication device trying to resume is not configured with an SCG, and, if it is to be added, which mode of operation should be set to the SCG e.g. deactivated or activated.

According to one aspect of the embodiments herein, the object is achieved by a method performed in a communication device in RRC_INACTIVE state to initiate measurements for the SCG, e.g. PSCell, that it has stored as part of the *UE Inactive* AS *Context* when the communication device determines that it has UL data available for the SCG, such as an SCG DRB or sufficient amount of data available for a split DRB to justify SCG activation.

The embodiments herein enable the network node to select strategy for a communication device in MR-DC during resuming from a suspended state, for example, to select the SCG state, e.g. SCG deactivated state or SCG activated state.

In some embodiments, a benefit of the embodiment herein is that the network node may set the SCG state in the first RRC message such as an *RRCResume* RRC message responding to the resume request.

Thanks to the method according to embodiments herein, the network node, e.g. the target network node the communication device is trying to resume to, is made aware whether the communication device initiated RRC resume request was triggered due to uplink data for a MCG DRB or for an SCG DRB, and based on that, take the appropriated educated decision on setting up MR-DC, release MR-DC, resume MR-DC and in case of setup and resume, in which state or mode of operation the SCG should be e.g. deactivated SCG or activated SCG.

According to embodiments herein, the network node may also select strategy for the communication device in MR-DC when resuming in case more than one type of DRB have uplink data to transmit, in which the DRB type may be MCG DRB, SCG DRB or a split DRB. An example is that both a MCG DRB and a SCG DRB have uplink data to transmit.

Hence, the network node, e.g. the target gNodeB where the communication device tries to resume, would not activate the SCG unnecessarily, in case the UL data that triggered the resume request is associated to the MCG or the amount of data is not sufficient to justify activating the SCG, which prevents unnecessary actions on the SCG and prevents unnecessary spent of energy at the communication device. That translates in lower power consumption at the communication device thanks to the method according to embodiments herein.

In addition to it, by preventing a potentially sub-optimal decision, the network node does not need to transmit another message to the communication device after the resume procedure e.g. an *RRCReconfiguration* and/or a *MAC CE* to deactivate the SCG for power savings purpose, which is also a signaling reduction.

Therefor embodiments herein provide an improved method for handling a resume procedure for a communication device operating in dual connectivity with a master cell group (MCG) and a secondary cell group (SCG) of a network node in a wireless communication network.

### BRIEF DESCRIPTION OF THE DRAWINGS

Examples of embodiments herein are described in more detail with reference to attached drawings in which:
- Figure 1: is a schematic block diagram illustrating dual connectivity combined with carrier aggregation in MR-DC;
- Figure 2: is a schematic block diagram illustrating E-UTRAN-NR Dual Connectivity;
- Figure 3: is a schematic block diagram illustrating a NR-DC, where both the master node controlling the MCG and the secondary node controlling the SCG are NR;
- Figure 4: is a schematic block diagram illustrating Control Plane architecture for Dual Connectivity in LTE DC, EN-DC and NR-DC;
- Figure 5: is a schematic block diagram illustrating network side protocol termination options for MCG, SCG and split DRBs in MR-DC with EPC (EN-DC);
- Figure 6: is a schematic block diagram illustrating network side protocol termination options for MCG, SCG and split DRBs in MR-DC with 5GC (NGEN-DC, NE-DC and NR-DC);
- Figure 7: is a schematic block diagram illustrating packet duplication;
- Figure 8: is a schematic block diagram illustrating dormancy like behavior for SCells in NR;
- Figure 9: is a schematic block diagram illustrating SCG states in 3GPP Rel-17;
- Figure 10: is a schematic block diagram illustrating UE state machine and state transitions in NR;
- Figure 11: is a signaling diagram illustrating RRC connection resume procedure, a successful case;
- Figure 12: is a schematic block diagram illustrating a wireless communication network;
- Figure 13: is a flow chart illustrating an example embodiment of a method performed in a communication device according to embodiments herein;
- Figure 14: is a signaling diagram illustrating an example embodiment of a resume procedure according to embodiments herein;
- Figure 15: is a signaling diagram illustrating another example embodiment of a resume procedure according to embodiments herein;
- Figure 16: is a signaling diagram illustrating another example embodiment of a resume procedure according to embodiments herein;
- Figure 17: is a flow chart illustrating another example embodiment of a method performed in a communication device according to embodiments herein;
- Figure 18: is a flow chart illustrating an example embodiment of a method performed in a network node according to embodiments herein;
- Figure 19: is a flow chart illustrating another example embodiment of a method performed in a network node according to embodiments herein;
- Figure 20: is a schematic block diagram illustrating an example embodiment of a network node;and
- Figure 21: is a schematic block diagram illustrating an example embodiment of a communication device.

### DETAILED DESCRIPTION

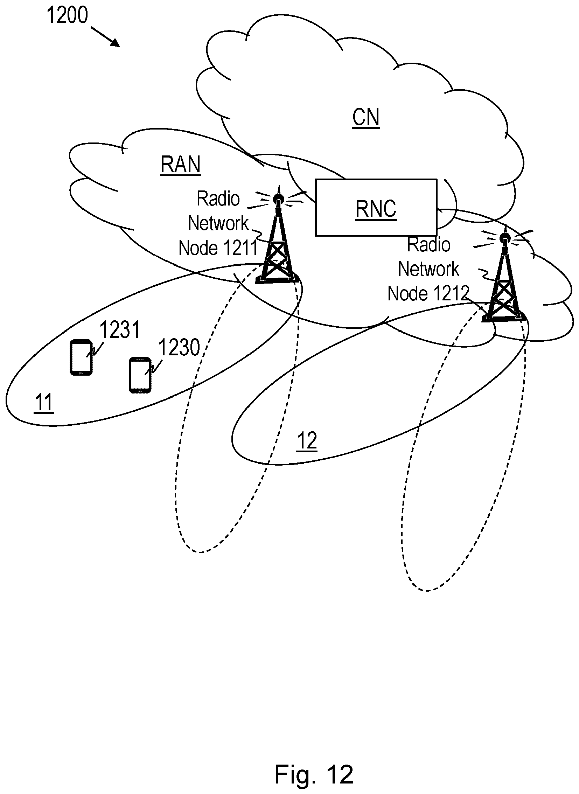

Embodiments herein relate to communications networks in general. **Figure 12** is a schematic overview depicting **a communication network 1200.** The communication network 1200 may be a wireless communications network comprising one or more RANs, and one or more CNs. The communication network 1200 may use a number of different technologies, such as Wi-Fi, Long Term Evolution (LTE), LTE-Advanced, NR, Wideband Code Division Multiple Access (WCDMA), Global System for Mobile communications/enhanced Data rate for GSM Evolution (GSM/EDGE), Worldwide Interoperability for Microwave Access (WiMax), or Ultra Mobile Broadband (UMB), just to mention a few possible implementations.

In the wireless communication network 1200, one or more wireless communication devices **1230, 1231** such as a UE, a mobile station or a wireless terminals communicates via one or more Radio Access Networks (RAN) to one or more core networks (CN). It should be understood by the skilled in the art that "wireless communication device" is a non-limiting term which means any terminal, wireless communication terminal, user equipment, Machine Type Communication (MTC) device, Device to Device (D2D) terminal, or node e.g. smart phone, laptop, mobile phone, sensor, relay, mobile tablets or even a small base station communicating within a cell.

Network nodes operate in the wireless communication network 1200 such as **a first network node 1211** and a **second network node 1212.** The first and second network node 1211, 1212 may be any of RAN node, such as gNB, eNB, en-gNB, ng-eNB, gNB etc. The first network node 1211 provides radio coverage over a geographical area, **a service area 11,** which may also be referred to as a beam or a beam group where the group of beams is covering the service area of a first radio access technology (RAT), such as 5G, LTE, Wi-Fi or similar. The second network node 1212 provides radio coverage over a geographical area, **a service area 12,** which may also be referred to as a beam or a beam group where the group of beams is covering the service area of a first or a second radio access technology (RAT), such as 5G, LTE, Wi-Fi or similar. It should be noted that a network node may be a RAN node, a CN node or an OAM node.

The first and second network nodes 1211 and 1212 may be a transmission and reception point e.g. a radio access network node such as a Wireless Local Area Network (WLAN) access point or an Access Point Station (AP STA), an access controller, a base station, e.g. a radio base station such as a NodeB, a gNB, an evolved Node B (eNB, eNode B), a base transceiver station, a radio remote unit, an Access Point Base Station, a base station router, a transmission arrangement of a radio base station, a stand-alone access point or any other network unit capable of communicating with a wireless communication device within the service area served by the respective first and second network nodes 1211 and 1212 depending e.g. on the radio access technology and terminology used. The first and second network nodes 1211 and 1212 may be referred to as a source and target network node, respectively, and may communicate with the wireless communication device 1230, 1231 with Downlink (DL) transmissions to the wireless communication device 1230, 1231 and Uplink (UL) transmissions from the wireless communication device 1230, 1231.

The first and second network nodes 1211, 1212 may each be either a master node (MN) having a cell group MCG, or a secondary node (SN) having a cell group SCG, respectively, as shown in Figure 1.

The description herein describes terms like SCG and PSCell, as one of the cells associated with the SCG. That can be for example a PSCell as defined in NR specifications (e.g. RRC TS 38.331), defined as a Special Cell (SpCell) of the SCG, or a Primary SCG Cell (PSCell), as follows:
- Secondary Cell Group: For a UE configured with dual connectivity, the subset of serving cells comprising of the PSCell and zero or more secondary cells (SCells).
- Special Cell: For Dual Connectivity operation the term Special Cell refers to the PCell of the MCG or the PSCell of the SCG, otherwise the term Special Cell refers to the PCell.
- Primary SCG Cell (PSCell): For dual connectivity operation, the SCG cell in which the UE performs random access when performing the Reconfiguration with Sync procedure.

For the sake of brevity, the description herein mostly refers and shows examples wherein the second cell group is a Secondary Cell Group (SCG) that is deactivated or suspended or in power saving mode of operation, for a UE configured with Multi-Radio Dual Connectivity (MR-DC). However, the method is equally applicable for the case where the second cell group is a Master Cell Group (MCG) for a UE configured with Dual Connectivity (e.g. MR-DC), wherein the MCG could be suspended, while the SCG is operating in normal mode.

The description herein describes that when the second cell group is deactivated e.g. SCG becomes deactivated upon reception of an indication from the network node, the UE stops monitoring PDCCH on the SCG cells, i.e. stop monitoring PDCCH of the PSCell and of the SCells of the SCG. Solutions are mainly described using as an example a second cell group that is a Secondary Cell Group that the UE configured with MR-DC is configured with; and, the SCG being deactivated mode of operation at the UE when the UE perform the actions disclosed in the method. However, the method is also applicable for the case one assumes that the second cell group is a Master Cell Group (MCG) that is deactivated, so that the UE stops monitoring PDCCH on the MCG and continues monitoring PDCCH on the SCG.

Correspondingly, the description herein mostly refers and shows examples wherein the first cell group is a Master Cell Group (MCG) for a UE configured with Multi-Radio Dual Connectivity (MR-DC). However, the method is equally applicable for the case where the first cell group is a Secondary Cell Group (SCG) that is deactivated or suspended or in power saving mode of operation, for a UE configured with Multi-Radio Dual Connectivity (MR-DC).

According to embodiments herein, a method performed by a communication device 1230 is provided for handling a resume procedure from a first state to a second state. The first state may be a suspended state such as RRC_INACTIVE state, the second state may be a connected state such as RRC_CONNECTED state.

According to embodiments herein, the communication device 1230 determines whether the resume procedure is initiated due to uplink data that is available for the MCG, such as an MCG DRB, or for the SCG, such as an SCG DRB or whether sufficient amount of data e.g. determined based on a configured threshold for UL data volume, is available for a split DRB to justify SCG activation. Based on this determination the communication device 1230 includes the UL data indication during the resume procedure e.g. within a resume request to the network node 1211 and/or multiplexed with the resume request to the network node 1211.

In a first embodiment, the communication device 1230 checks the data availability in the priority order of SCG bearer, split bearer, and followed by MCG bearer. In other words, the communication device 1230 first checks if there is UL data available in the SCG bearer followed by split bearer and MCG bearer.

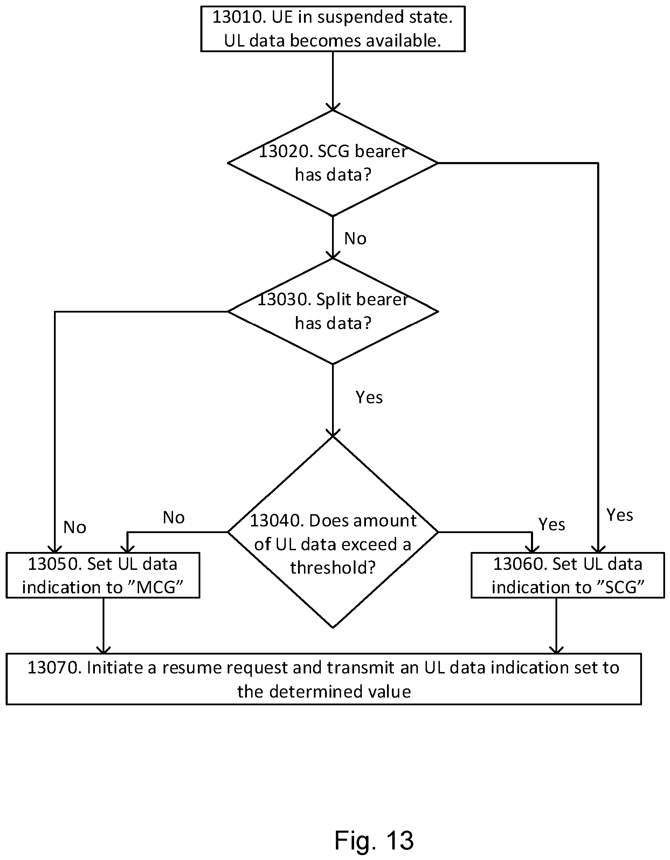

The method according to a first embodiment will be described in detail with reference to **Figure 13****,** where the main actions or steps performed by the communication device 1230 are illustrated. The method comprises the following actions which action may be performed in any suitable order.

### Action 13010

The communication device 1230 is in a first state e.g. a suspended state such as the RRC_INACTIVE state, and has MR-DC configured with an MCG and an SCG. When uplink data becomes available, upper layers triggers the RRC layer in the communication device 1230 to initiate resume of the suspended RRC connection.

### Action 13020

The communication device 1230 checks if SCG bearer has data. If SCG bearer has data, the communication device 1230 in Action 13060 sets the UL data indication to "SCG"..

### Action 13030

If SCG bearer does not have data, the communication device 1230 checks if split bearer has data. If split bearer does not have data, the communication device 1230 in Action 13050 sets the UL data indication to "MCG".

### Action 13040

If split bearer has data, the communication device 1230 checks if the total amount of data e.g., PDCP data volume and the RLC data volume pending for initial transmission in the primary and split secondary RLC entity, for the split bearer exceeds a threshold e.g., ul-DataSplitThreshold. If the data exceeds the threshold, the communication device 1230 in Action 13060 sets the UL data indication to "SCG". Otherwise, the communication device 1230 in Action 13050 sets the UL data indication to "MCG".

### Action 13050

The communication device 1230 sets the UL data indication to "MCG".

### Action 13060

The communication device 1230 sets the UL data indication to "SCG".

### Action 13070

The communication device 1230 initiates a resume procedure by transmitting a resume request, e.g. *RRC Resume Request* message to a network node, e.g. the network node 1211. During the resume procedure, the communication device 1230 also transmits the UL data indication as set according to the previous Actions.

In this embodiment, if an UL data indication is set to SCG, then either the SCG bearer has data or the split bearer has more data than the threshold and thus an indication from the communication device 1230 that there is data available for SCG. It is not clear though if there is data available for MCG. But this is not essential, since the MCG needs to be resumed in any case.

If an UL data indication is set to MCG, then neither SCG bearer has data nor the split bearer has more data than the threshold, and thus this is an implicit indication from the communication device 1230 that there is no data available for SCG.

In one alternative, in Action 13020 of Figure 13, the criteria for when the SCG bearer has data is that the amount of data e.g., PDCP data volume and the RLC data volume pending for initial transmission in the RLC entity, or only the PDCP data volume, for the SCG bearer exceeds a threshold. In another alternative, the communication device 1230 calculates the sum of the amount of data for all MCG bearers, this sum is referred here as MCG_SUM, and also a sum for all the SCG bearers, this sum is referred here as SCG_SUM. The communication device 1230 then compares the MCG_SUM with the SCG_SUM to determine whether SCG bearer has data. For example, if the SCG_SUM is larger than the MCG_SUM, the SCG bearer is determined to have data. Or for example, if the SCG_SUM exceeds the MCG_SUM plus a threshold, the SCG bearer is determined to have data. The thresholds in these alternatives may be configured by the network node 1211.

In yet another alternative, in Action 13040 of Figure 13, the criterion of the threshold for split bearer is compared to the data volume amount in the MCG bearer. The communication device 1230 calculates the sum of the amount of data for all MCG bearers (MCG_SUM) and also a sum of the amount of data for all split bearers (SPLIT_BEARER_SUM). Examples include that: if the SPLIT_BEARER_SUM exceeds MCG_BEAER_SUM or MCG_BEARER_SUM plus a threshold, then the split bearer is determined to have data. The thresholds in these alternatives may be configured by the network node 1211.

The communication device 1230 may include the UL data indication during the resume procedure e.g. within the resume request to the network node 1211 and/or multiplexed with the resume request to the network node 1211.

Concerning how the UL data indication is indicated to the network node 1211, there may be different alternatives.

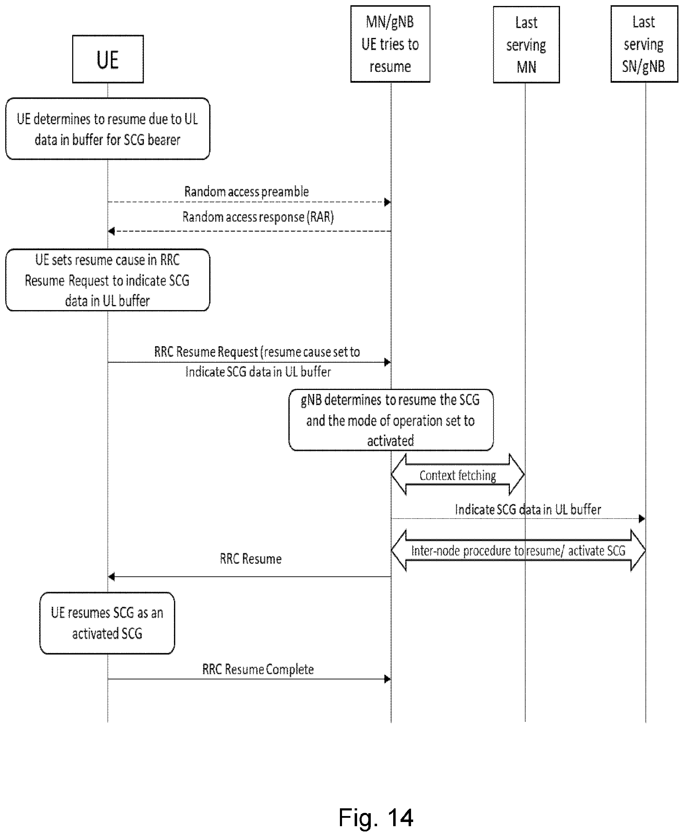

In one alternative, as illustrated in **Figure 14****,** during the resume procedure, the UL data indication may, for example, be transmitted as a resume cause, which may be a parameter set in the ***RRC Resume Request*** message that the **UE** transmits to a network node **MNIgNB** that the UE tries to resume. For example, a new resume cause e.g. scg-data, is set to indicate that the resume procedure has been triggered due to a certain amount of data mapped to an SCG bearer or split bearer being above a predetermined threshold. And for example, in other cases such as when the UL data is for an MCG bearer, the UE sets the value of the existing resume cause "mo-data", or another existing resume cause. In another embodiment, a new cause value may indicate that the UE has an amount of UL data in buffer above a certain threshold regardless of that being associated to SCG bearers.

An example of how it is implemented in the 3GPP specs is shown below with the changes underlined.

### PDCP spec v16.2.0

### 5.6 Data volume calculation

### ----- Unchanged parts omitted -----

If the transmitting PDCP entity is associated with at least two RLC entities, when indicating the PDCP data volume to a MAC entity for BSR triggering and Buffer Size calculation (as specified in TS 38.321 [4] and TS 36.321 [12]), the transmitting PDCP entity shall:
- if the PDCP duplication is activated for the RB:
   - indicate the PDCP data volume to the MAC entity associated with the primary RLC entity;
   - indicate the PDCP data volume excluding the PDCP Control PDU to the MAC entity associated with the RLC entity other than the primary RLC entity activated for PDCP duplication;
   - indicate the PDCP data volume as 0 to the MAC entity associated with RLC entity deactivated for PDCP duplication;
- else (i.e. the PDCP duplication is deactivated for the RB):
   - if the split secondary RLC entity is configured; and
   - if the total amount of PDCP data volume and RLC data volume pending for initial transmission (as specified in TS 38.322 [5]) in the primary RLC entity and the split secondary RLC entity is equal to or larger than *ul-DataSplitThreshold*:
      - indicate the PDCP data volume to both the MAC entity associated with the primary RLC entity and the MAC entity associated with the split secondary RLC entity;
      - indicate the PDCP data volume as 0 to the MAC entity associated with RLC entity other than the primary RLC entity and the split secondary RLC entity;
   - else, if the transmitting PDCP entity is associated with the DAPS bearer:
      - if the uplink data switching has not been requested:
      - indicate the PDCP data volume to the MAC entity associated with the source cell;
   - else:
      - indicate the PDCP data volume excluding the PDCP Control PDU for interspersed ROHC feedback associated with the source cell to the MAC entity associated with the target cell;
      - indicate the PDCP data volume of PDCP Control PDU for interspersed ROHC feedback associated with the source cell to the MAC entity associated with the source cell;
- else:
   - indicate the PDCP data volume to the MAC entity associated with the primary RLC entity;
   - indicate the PDCP data volume as 0 to the MAC entity associated with the RLC entity other than the primary RLC entity.
- **indicate to the RRC layer the RLC entities that have non-zero PDCP data volume to transmit according to the procedure in this subclause.**

### RRC spec v16.3.0

### 5.3.13.2 Initiation

### ----- Unchanged parts omitted -----

Upon initiation of the procedure, the UE shall:
1> if the resumption of the RRC connection is triggered by response to NG-RAN paging:
   ----- *Unchanged parts omitted* -----
1> else if the resumption of the RRC connection is triggered by upper layers:
   ----- *Unchanged parts omitted* -----
1> else if the resumption of the RRC connection is triggered due to an RNA update as specified in 5.3.13.8:
   ----- *Unchanged parts omitted* -----
1> **else if SCG is de-activated:**
   2> **if the resumption of the RRC connection is triggered due to RLC entities associated with SCG:**
      3> **set *resumeCause* to "scg-data":**
   2> **else if the resumption of the RRC connection is triggered due to RLC entities associated with MCG:**
      3> **set *resumeCause* to "mo-data":**
1> if the UE is in NE-DC or NR-DC: ...

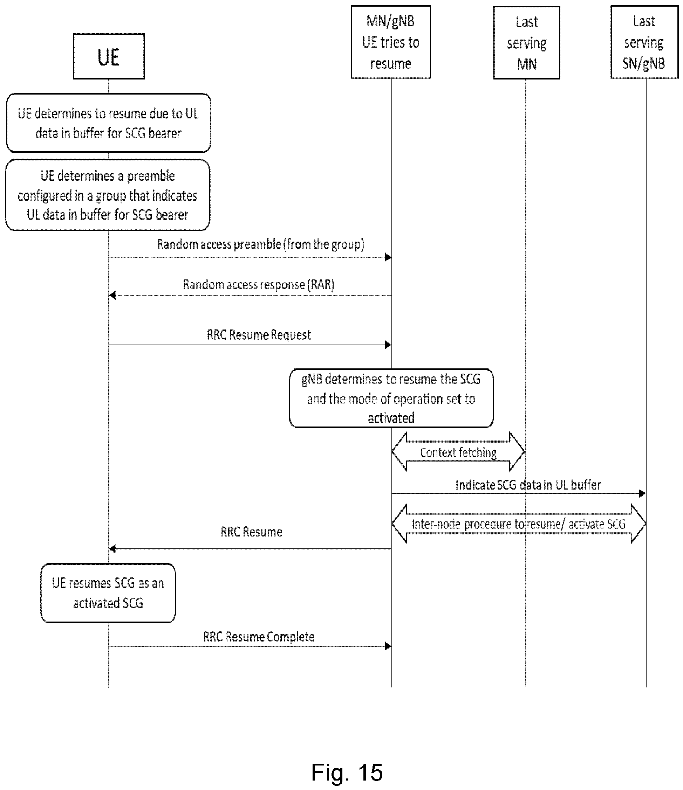

In another embodiment, as illustrated in **Figure 15****,** the UL data indication is indicated to the network node e.g. **MN/gNB** that UE tries to resume by the selection of a specific PRACH resource, such as a preamble e.g. that may be associated to a preamble group and/or a specific time-frequency PRACH resource that according to a random access configuration indicates the UL data indication. For example, the network node could have configured a preamble group for indicating UL traffic above a threshold so that the UE that wants to resume determines if UL data in buffer is above the threshold and if it is, it selects a preamble associated to that group so that upon reception at the network node, the network node becomes aware that the UE has an amount of UL data in buffer above the threshold. In an alternative, the UL data indication is associated to data to be transmitted by an SCG, e.g. data mapped to an SCG bearer, so that it not only indicates to the network node that an amount of data is above a threshold, but that the amount of data is for an SCG transmission. Another alternative is to define multiple preamble groups indicating different indications e.g. group X1 data for both MCG and SCG, group X2 data for the SCG only, group X3 data for the MCG only. In one example, the network node provides the configuration for PRACH resource(s), e.g. preamble(s) and/or specific time-frequency PRACH resource(s) to use for UL data indication in system information. In another example, the network node provides the configuration in dedicated signaling, such as the RRC Release message that suspended the UE to RRC_INACTIVE state.

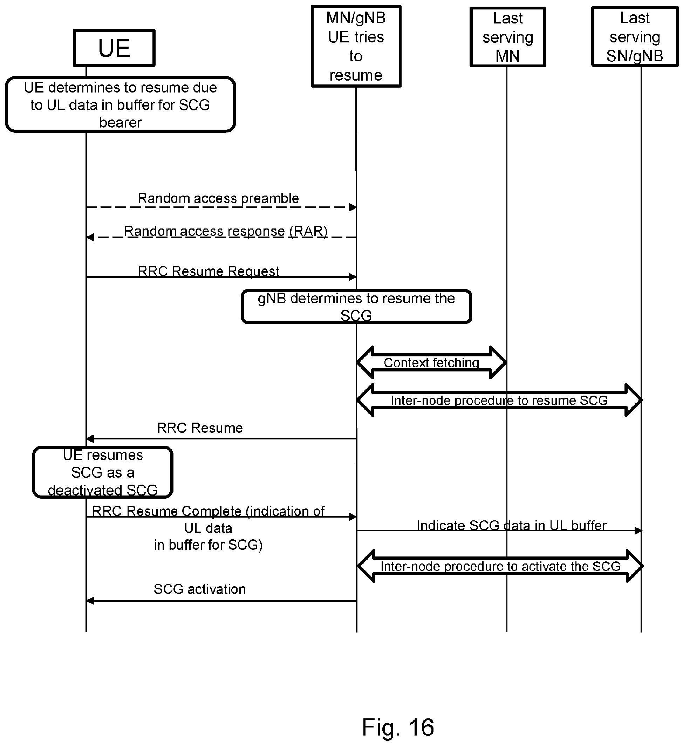

In another embodiment, as illustrated in **Figure 16****,** the UL data on SCG may be further indicated in the RRC Resume Complete message. This is useful if there is data arrival for SCG after RRC resume request is sent. This is implemented together with the communication device 1230 embodiments in the first embodiments described above. If the communication device 1230 has indicated UL data as "scg-data" in the RRC Resume request message, then communication device 1230 does not indicate anything further in the RRCComplete message. If the communication device 1230 has not indicated UL data as "scg-data" in the RRC Resume request message and if there is data available in the RLC entities associated with the SCG that need to be transmitted after receiving the RRC Resume message from the network node, then the communication device 1230 indicates in the *RRCComplete* message that there is data available in the RLC entities associated with the SCG.

Below is an example on how this can be implemented in the RRC spec v16.3.0, with changes underlined.

### 5.3.13.4 Reception of the RRCResume by the UE

The UE shall:
----- *Unchanged parts omitted* -----
1> set the content of the of *RRCResumeComplete* message as follows:
   ----- *Unchanged parts omitted* -----

   2> if the UE is configured to provide the measurement gap requirement information of NR target bands:
      3> include the *NeedForGapsInfoNR* and set the contents as follows:
         4> include *intraFreq-needForGap* and set the gap requirement information of intra-frequency measurement for each NR serving cell;
         4> if *requestedTargetBandFilterNR* is configured, for each supported NR band that is also included in *requestedTargetBandFilterNR,* include an entry in *interFreq-needForGαp* and set the gap requirement information for that band; otherwise, include an entry in *interFreq-needForGap* and set the corresponding gap requirement information for each supported NR band;
   2> **if the *RRCResume* message does include *activateSCG* and the *resumeCause* was not set to "scg-data":**
      3> **if PDCP layer has indicated data volume of the RLC entities associated with SCG:**
         4> **include UL data indication *scg-Data* and set it to *true.***
1> submit the *RRCResumeComplete* message to lower layers for transmission;
1> the procedure ends.

### - RRCResumeComplete

The *RRCResumeComplete* message is used to confirm the successful completion of an RRC connection resumption.
Signalling radio bearer: SRB1
RLC-SAP: AM
Logical channel: DCCH
Direction: UE to Network

### RRCResumeComplete message

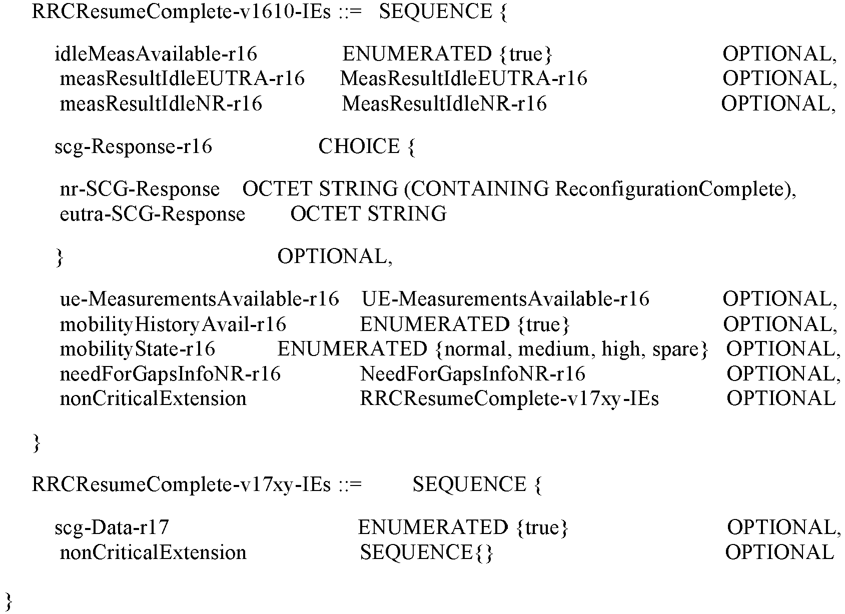

According a second embodiment herein, a method performed by a communication device 1230 is provided for handling a resume procedure from a first state, e.g. a suspended state to a second state, e.g. a connected state, which may be combined with the first embodiment described above. The communication device 1230 in RRC_INACTIVE initiates measurements for the SCG e.g. the PSCell, that it has stored as part of the *UE Inactive AS Context* when the communication device 1230 determines that it has UL data available for the SCG, such as UL data available for an SCG DRB or a sufficient amount of data available for a split DRB to justify SCG activation.

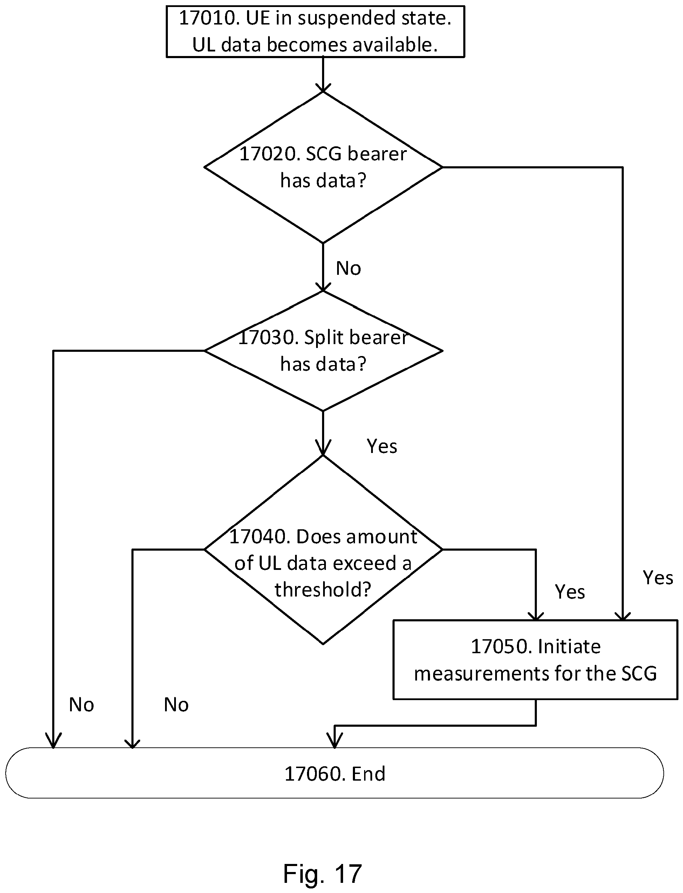

The method will be described in detail with reference to **Figure 17****,** where the main actions or steps performed by the communication device 1230 according to the second embodiment is illustrated. The method comprises the following actions which action may be performed in any suitable order.

### Action 17010

The communication device 1230 is in a suspended state, such as the RRC_INACTIVE state, and has MR-DC configured with an MCG and an SCG. Uplink data becomes available and upper layers triggers the RRC layer in the communication device 1230 to initiate resume of the suspended RRC connection.

### Action 17020

The communication device 1230 checks if SCG bearer has data. If SCG bearer has data, the communication device 1230 in Action 17050 initiates measurements for the SCG..

### Action 17030

If SCG bearer does not have data, the communication device 1230 checks if split bearer has data.

### Action 17040

If split bearer has data, the communication device 1230 checks if the total amount of data i.e., PDCP data volume and the RLC data volume pending for initial transmission in the primary and split secondary RLC entity, for the split bearer exceeds a threshold e.g., ul-DataSplitThreshold. If the data exceeds the threshold, the communication device 1230 in Action 17050 initiates measurements for the SCG.

### Action 17050

The communication device 1230 initiates measurements for the SCG.

In one alternative the communication device 1230 performs continuous measurements on the suspended SCG e.g. the PSCell while it is in RRC_INACTIVE state. In one example, the communication device 1230 performs the measurements on the suspended SCG (PSCell), i.e. the one stored in the *UE Inactive AS Context,* while in RRC_INACTIVE state based on a network configuration. The network configuration may then e.g. be provided through system information, whereby it e.g. is valid in the cell where the configuration is broadcasted, or through dedicated signaling, such as e.g. in the *RRC Release* message that suspended the communication device 1230 to RRC_INACTIVE state.

In another alternative the communication device 1230 in RRC_INACTIVE state initiates measurements for the suspended SCG e.g. the PSCell that it has stored as part of the *UE Inactive AS Context,* when it determines that it has an amount of UL data available for a split DRB, which is above a threshold. The threshold can then be configured by the network, e.g. in system information or in dedicated signaling, e.g. the *RRC Release* message that suspended the communication device 1230 to RRC_INACTIVE state. In one example, the threshold value for initiating the measurements on the suspended SCG/PSCell is then lower than the threshold for indicating that the SCG should be activated and/or resumed.

In some alternatives of the above embodiments, the communication device 1230 indicates to the network node whether it is in coverage of the suspended SCG e.g. the PSCell as part of, or following, the RRC Resume procedure. The communication device 1230 may then e.g. indicate to the network node whether it is in coverage of the suspended SCG/PSCell through an **SCG in-coverage indication.** In one example, the communication device 1230 determines that it is in coverage of the suspended SCG e.g. the PSCell based on one or more threshold values, e.g. that the measured Reference Signal Received Power (RSRP), Reference Signal Received Quality (RSRQ) and/or Signal to Interference plus Noise Ratio (SINR) values for the suspended PSCell is/are above configured threshold value(s). The threshold values to determine whether the communication device 1230 is in coverage of the suspended SCG e.g. the PSCell may e.g. be based on a network configuration, which may be provided by the network node 1211,1212 to the communication device 1230 e.g. through system information or dedicated signaling, such as e.g. in the *RRC Release* message that suspended the communication device 1230 to RRC_INACTIVE state.

In one alternative, the UE transmits the measurement results for the SCG e.g. PSCell that was stored as part of the *UE Inactive AS Context* while the communication device 1230 was in RRC_INACTIVE state, e.g. measured RSRP, RSRQ and/or SINR values, in or following the RRC Resume procedure.

In some alternatives the indication whether the UE is in coverage of the suspended SCG/PSCell, i.e. the **SCG in-coverage indication,** and/or the measurement results for the suspended SCG/PSCell is/are provided by the communication device 1230 to the network node together with the **UL data indication** according to the above embodiments. In some alternatives, the SCG in-coverage indication and/or the measurement results for the suspended SCG/PSCell is/are provided by the communication device 1230 to the network node according to those methods even if no UL data indication is provided to the network node. In one example, the SCG in-coverage indication and/or the measurement results for the suspended SCG/PSCell is/are provided within or multiplexed with an *RRC Resume Request* message, e.g. as one or more separate field(s) or using specific resume cause values. In another example, the SCG in-coverage indication and/or the measurement results for the suspended SCG/PSCell is/are provided within the *RRC Resume Complete* message or in another RRC message that is sent as part of, or after, the RRC Resume procedure, e.g. an *UEAssistanceInformation* message.

According to embodiments herein a method performed by the network node 1211, 1212 is provided for handling a resume procedure for a communication device 1230 in the wireless communication network 1200.

According to a first embodiment, the network node 1211, 1212 operates as a target network node e.g. a gNodeB where the communication device 1230 is attempting to resume. The method comprises receiving from the communication device 1230 an UL data indication, as described above e.g. associated to a suspended SCG, and based on that information, determining the SCG configuration for the communication device 1230, sometimes referred to as the MR-DC strategy to be set for the incoming communication device 1230.

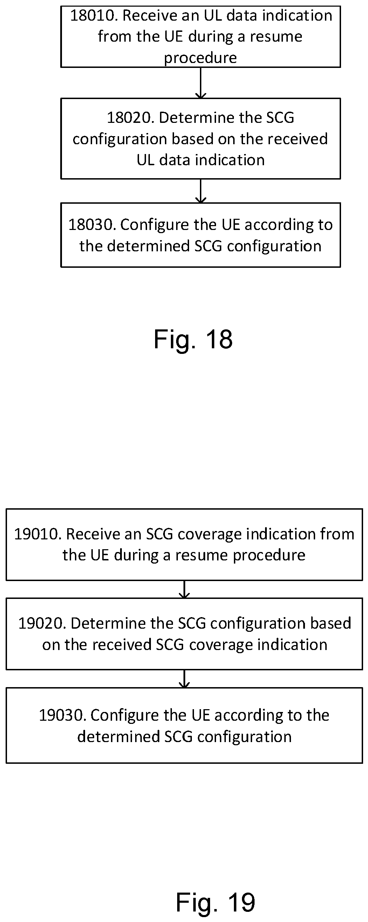

The method will be described in detail with reference to **Figure 18****,** where the main actions or steps performed by the network node according to the first embodiment is illustrated. The method comprises the following actions which action may be performed in any suitable order.

### Action 18010

The network node 1211, 1212 receives an UL data indication from the communication device 1230 during a resume procedure initiated by the communication device 1230.

### Action 18020

The network node 1211, 1212 determines a SCG configuration for the communication device 1230 based on the received UL data indication.

### Action 18030

The network node 1211, 1212 configures the communication device 1230 according the determined SCG configuration. This configuration may be provided in a message sent to the communication device 1230, for example in a *RRCResume* message as response to *RRCResumeRequest* or in a separate *RRCReconfiguration* message.

As part of the determination of the SCG configuration for the communication device 1230, the network node 1211, 1212 performs at least one of the following actions:
Determining whether a suspend SCG is to be resumed and, if it is to be resumed, which mode of operation should be set to the SCG e.g. deactivated or activated;
Determining whether an SCG is to be released in case the UE trying to resume is configured with an SCG;
Determining whether an SCG is to be added in case the UE trying to resume is not configured with an SCG, and, if it is to be added, which mode of operation should be set to the SCG e.g. deactivated or activated.

According to embodiments herein, the method comprises the network node determining the MR-DC strategy based on the UL data indication and possibly other information such as the resource availability e.g. for the SCG, possibly indicated by the SN, or measurement results from the communication device 1230, e.g. RSRP, RSRQ, SINR from the communication device 1230 for the PSCell(s) and/or SCells of the SCG, which could have been obtained as an early measurement report.

According to a second embodiment, the network node 1211. 1212, operating as a target network node e.g. a gNodeB where the UE is attempting to resume, receives an indication, as part of the RRC Resume procedure, from the communication device 1230 that it is in coverage of the SCG/PSCell that is stored as part of the *UE Inactive* AS *Context,* e.g. an **SCG *in-coverage indication.*** Based on this indication the network node 1211, 1212 may determine whether to restore the suspended SCG e.g. PSCell or not. The indication may also be used by the network node 1211, 1212 to determine whether to resume the SCG/PSCell in SCG activated state or SCG deactivated state. As an example, if the **SCG *in-coverage indication*** indicates that the communication device 1230 is not in coverage of the SCG e.g. the PSCell, the network node 1211, 1222 does not resume the SCG, or it resumes the SCG in deactivated state, i.e. in an SCG power saving mode.

The network node 1211, 1212 may also receive a measurement report from the communication device 1230 and use the content of that report in the determination of the SCG configuration.

The method will be described in detail with reference to **Figure 19****,** where the main actions or steps performed by the network node according to the second embodiment is illustrated. The method comprises the following actions which action may be performed in any suitable order.

### Action 19010

The network node 1211, 1212 receives an SCG coverage indication from the communication device 1230 during a resume procedure initiated by the communication device 1230.

### Action 19020

The network node 1211, 1212 determines an SCG configuration for the communication device 1230 based on the received SCG coverage indication.

### Action 19030

The network node 1211, 1212 configures the communication device 1230 according to the determined SCG configuration. This configuration may be provided in a message sent to the communication device 1230, for example in a *RRCResume* message as response to *RRCResumeRequest* or in a separate *RRCReconfiguration* message.

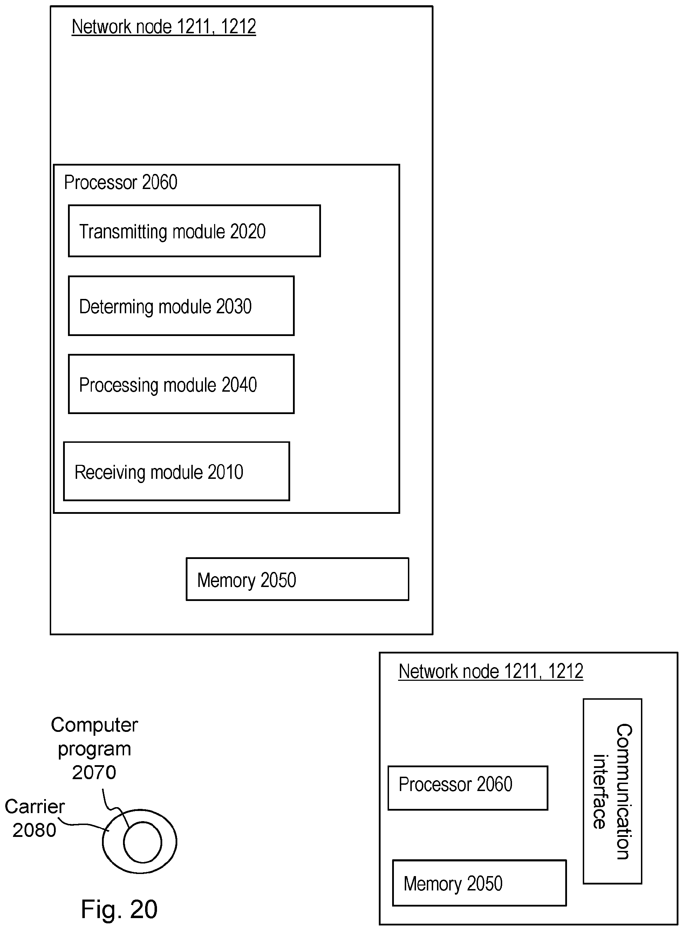

To perform the method in the network node 1211, 1212, the network node 1211, 1212 comprises modules as shown in **Figure 20****.** The network node 1211, 1212 comprises a **receiving module 2010, a transmitting module 2020, a determining module 2030, a processing module 2040, a memory 2050** etc.

The network node 1211, 1212 is configured to perform any one of the Actions 18010-18030, 19010-19030 described above.

The method according to embodiments herein may be implemented through one or more processors, such as the processor 2060 in the network node 1211, 1212 together with computer program code for performing the functions and actions of the embodiments herein. The program code mentioned above may also be provided as a computer program product, for instance in the form of computer readable medium or a data carrier **2080** carrying computer program code **2070,** as shown in Figure 11, for performing the embodiments herein when being loaded into the network node 1211, 1212. One such carrier may be in the form of a CD ROM disc. It is however feasible with other data carriers such as a memory stick. The computer program code may furthermore be provided as pure program code on a server or a cloud and downloaded to the network node 1211, 1212.

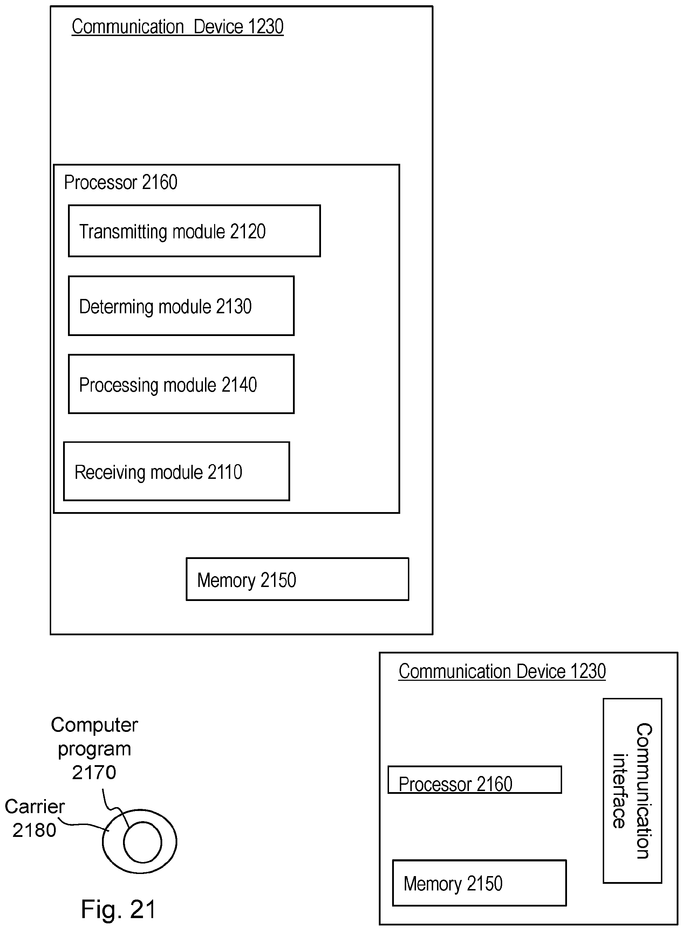

**Figure 21** shows an example embodiment for the communication device 1230 in which a method for handling a resume procedure may be implemented. The communication device 1230 comprises modules as shown in Figure 21. The communication device 1230 comprises a **receiving module 2110, a transmitting module 2120, a determining module 2130, a processing module 2140, a memory 2150** etc. The communication device 1230 is configured to perform any one of the method Actions 13010-13070, 17010-17050 described above.

The method according to embodiments herein may be implemented through one or more processors, such as the processor 2160 in the UE 1230 together with computer program code for performing the functions and actions of the embodiments herein. The program code mentioned above may also be provided as a computer program product, for instance in the form of computer readable medium or a data carrier **2180** carrying computer program code **2170,** as shown in Figure 21, for performing the embodiments herein when being loaded into the UE 1230. One such carrier may be in the form of a CD ROM disc. It is however feasible with other data carriers such as a memory stick. The computer program code may furthermore be provided as pure program code on a server or a cloud and downloaded to the communication device 1230.

## Claims

1. A method performed in a communication device (1230) for handling a resume procedure from a power saving mode of operation to a connected mode of operation, wherein the communication device (1230) is configured with multi-radio dual connectivity, MR-DC, with a first cell group and a second cell group in a wireless communication network (1200), **characterized by** the method comprising
*initiating* (13010) a resume procedure when there is an uplink, UL, data, available at the communication device (1230) while it is in the power saving mode of operation;
*setting* (13050, 13060) an UL data indication indicating whether the UL data is available for the first cell group or the second cell group; and
*transmitting* (13070) the UL data indication to a network node (1211, 1212).

2. The method according to claim 1, wherein the UL data indication indicates whether the resume is initiated due to the uplink data that is available only for the first cell group, or regardless of uplink data available to the first cell group, the uplink data is available for the second cell group.

3. The method according to claim 1 or 2, wherein setting (13050, 13060) an UL data indication indicating whether the UL data is available for the first cell group or the second cell group comprises:
setting the UL data indication based on one of the following:
a) whether a second cell group bearer has data;
b) whether a split bearer has data.

4. The method according to claim 3 further comprising setting the UL data indication based on whether an amount of the UL data available for a bearer exceeds a threshold.

5. The method according to any one of claims 1-4, wherein setting (13050, 13060) an UL data indication indicating whether the UL data is available for the first cell group or the second cell group comprises:
*checking* (13020) whether the second cell group bearer has data;
if a second cell group bearer has data,
*setting* (13060) the UL data indication indicating that the UL data is available for the second cell group (SCG);
if a second cell group bearer does not have data,
*checking* (13030) whether the split bearer has data;
if a split bearer does not have data,
*setting* (13050) the UL data indication indicating that the UL data is available for the first cell group (MCG);
if a split bearer has data,
*checking* (13040) whether a total amount of the data for the split bearer exceeds a split bearer data threshold;
if the total amount of the data for the split bearer exceeds the split bearer data threshold,
*setting* (13060) the UL data indication indicating that the UL data is available for the second cell group (SCG);
if the total amount of the data for the split bearer does not exceed the split bearer data threshold,
*setting* (13050) the UL data indication indicating that the UL data is available for the first cell group (MCG).

6. The method according to claim 5, wherein checking (13020) whether the second cell group bearer has data comprises:
*checking* whether an amount of data for the second cell group bearer exceeds a second cell group bearer data threshold;
*determining* that the second cell group bearer has data if the amount of data for the second cell group bearer exceeds the second cell group bearer data threshold.

7. The method according to claim 5, wherein checking (13020) whether the second cell group bearer has data comprises:
*calculating* a sum of the amount of data for all the first cell group bearers;
*calculating* a sum of the amount of data for all the second cell group bearers;
*determining* that the second cell group bearer has data if the sum of the amount of data for all the second cell group bearers is larger than the sum of the amount of data for all the first cell group bearers or if the sum of the amount of data for all the second cell group bearers exceeds the sum of the amount of data for all the first cell group bearers plus a threshold.

8. The method according to claim 5, wherein checking (13040) whether a total amount of the data for the split bearer exceeds a split bearer data threshold comprises:
*calculating* a sum of the amount of data for all the first cell group bearers;
*calculating* a sum of the amount of data for all the split bearers;
*determining* that the split bearer has data if the sum of the amount of data for all the split bearers exceeds the sum of the amount of data for all the first cell group bearers or if the sum of the amount of data for all the split bearers exceeds the sum of the amount of data for all the first cell group bearers plus a threshold.

9. The method according to any one of claims 1-8, wherein the UL data indication is included in a resume request message and/or multiplexed with a resume request message to be transmitted to the network node (1211, 1212).

10. The method according to any one of claims 1-9, wherein the UL data indication is transmitted or indicated as any one of the following:
a) a resume cause comprised in a resume request message;
b) a preamble associated to a preamble group and/or a specific time-frequency resource configured by the network node for the communication device (1230) to use for UL data indication;
c) data mapped to a second cell group bearer to be transmitted by the second cell group;
d) a selection of preamble(s) and/or specific time-frequency resource(s) configured by the network node for the communication device (1230) to use for different UL data indications;
e) a resume complete message;
f)an information element in a resume complete message;
g) a selection of Physical Random Access Channel, PRACH, resources configured by the network node for the communication device (1230) to use for UL data indication.

11. A method performed in a communication device (1230) for handling a resume procedure from a power saving mode of operation to a connected mode of operation, wherein the communication device is configured with multi-radio dual connectivity, MR-DC, with a first cell group and a second cell group in a wireless communication network (1200), **characterized by** the method comprising:
checking (17020) whether the second cell group bearer has data;
if the second cell group bearer does not have data,
checking (17030) whether the split bearer has data;
if the split bearer has data,
checking (17040) whether a total amount of the data for the split bearer exceeds a split bearer data threshold;
if the total amount of the data for the split bearer exceeds the split bearer data threshold,
initiating (17050) measurements for the second cell group.

12. The method according to claim 11, further comprising transmitting an indication to the network node (1211, 1211) for indicating whether the communication device (1230) is in a coverage of the second cell group as part of or following the resume procedure from the power saving mode of operation to the connected mode of operation.

13. The method according to claim 12, further comprising determining whether the communication device (1230) is in the coverage of the second cell group based on whether any one or more measured values on Reference Signal Received Power, RSRP, Reference Signal Received Quality, RSRQ, Signal to Interference plus Noise Ratio, SINR, for the second cell group is or are above one or more threshold value(s).

14. The method according to any one of claims 11-13, further comprising transmitting measurement results for the second cell group to the network node (1211, 1211) in or following the resume procedure from the power saving mode of operation to the connected mode of operation.

15. The method according to claims 12 and 14, wherein the indication of whether the communication device (1230) is in a coverage of the second cell group and/or the measurement results for the second cell group is/are transmitted to the network node (1211, 1211) together with an UL data indication.

16. The method according to claims 12 and 14, wherein the indication of whether the communication device (1230) is in a coverage of the second cell group and/or the measurement results for the second cell group is/are transmitted within or multiplexed with a resume request message as one or more separate field(s) or using specific resume cause values.

17. The method according to claims 12 and 14, wherein the indication of whether the communication device (1230) is in a coverage of the second cell group and/or the measurement results for the second cell group is/are transmitted within a resume complete message or in an assistance information message that is sent as part of, or after the resume procedure.

18. A communication device (1230) configured to perform the method according to any one of claims 1-17.

19. A method performed in a network node (1211, 1212) for handling a resume procedure for a communication device (1230) from a power saving mode of operation to a connected mode of operation in a wireless communication network (1200), wherein the communication device is configured with multi-radio dual connectivity, MR-DC, with a first cell group and a second cell group, **characterized by** the method comprising:
*receiving* (18010, 19010) an uplink, UL, data indication or a second cell group coverage indication from the communication device (1230) during a resume procedure initiated by the communication device (1230), wherein the UL data indication indicates whether the UL data is available for the first cell group bearer or the second cell group bearer and the second cell group coverage indication indicates whether the communication device (1230) is in a coverage of the second cell group;
*determining* (18020, 19020) a second cell group configuration for the communication device (1230) based on the received UL data indication or second cell group coverage indication; and
*configuring* (18030, 19030) the communication device (1230) according the determined second cell group configuration.

20. The method according to claim 19, wherein configuring (18030, 19030) the communication device (1230) is performed by transmitting the determined second cell group configuration in a resume message or in a separate reconfiguration message to the communication device (1230).

21. The method according to any one of claims 19-20, wherein determining (18020) a second cell group configuration for the communication device (1230) based on the received UL data indication comprises one or more of the following actions:
a) determining whether a suspended second cell group is to be resumed, and if it is determined that the suspended second cell group is to be resumed, setting a mode of operation to the second cell group with deactivated or activated;
b) determining whether a second cell group is to be released in case the communication device (1230) is attempting to resume is configured with a second cell group;
c) determining whether a second cell group is to be added in case the communication device (1230) is attempting to resume is not configured with a second cell group, and, if it is determined that a second cell group is to be added, setting a mode of operation to the second cell group with deactivated or activated.

22. The method according to any one of claims 19-21, further comprises configuring, by system information or a dedicated signaling, any one or a combination of the following:
a) a preamble or a group of preamble(s),
b) one or a set of specific time-frequency resource(s),
c) a data volume threshold,
d) a set of Physical Random Access Channel, PRACH, resources,
for the communication device (1230) to use for different UL data indications.

23. The method according to any one of claims 19-22, wherein receiving (18010, 19010) an uplink, UL, data indication or a second cell group coverage indication comprises any one of:
a) receiving an UL data indication or second cell group coverage indication in a resume request message sent by the communication device (1230), wherein the UL data indication is a parameter comprised in the resume request message;
b) receiving an UL data indication as a resume cause, wherein a new resume cause is set to indicate that the resume procedure has been triggered due to a certain amount of data mapped to a second cell group bearer or split bearer being above a data volume threshold, or a new resume cause is set to indicate that the communication device (1230) has an amount of UL data in buffer above a data volume threshold regardless of that being associated to second cell group bearers, or when the UL data is for a second cell group bearer, an existing resume cause is set to a value "mo-data" or to another existing resume cause;
c) receiving an UL data indication in an assistance information message or in an assistance information message multiplexed with a resume request message, or in a resume complete message, or in an information element in a resume complete message;
e) receiving an UL data indication in a preamble or a group of preamble(s), or in one or a set of specific time-frequency resource(s) or Physical Random Access Channel, PRACH, resource(s), wherein the preambles, the specific time-frequency resource(s) or PRACH resources are configured to indicate different UL data indications.

24. A network node (1211, 1212) configured to perform the method according to any one of claims 19-23.

## Patentansprüche

1. Verfahren, das in einer Kommunikationsvorrichtung (1230) durchgeführt wird, zum Handhaben eines Wiederaufnahmeverfahrens von einem Energiesparbetriebsmodus zu einem verbundenen Betriebsmodus, wobei die Kommunikationsvorrichtung (1230) mit Multi-Funk-Dual-Konnektivität, MR-DC, mit einer ersten Zellengruppe und einer zweiten Zellengruppe in einem drahtlosen Kommunikationsnetz (1200) konfiguriert ist, **dadurch gekennzeichnet, dass** das Verfahren Folgendes umfasst:
*Initiieren* (13010) eines Wiederaufnahmeverfahrens, wenn Uplink-, UL-, Daten an der Kommunikationsvorrichtung (1230) verfügbar sind, während sie sich im Energiesparbetriebsmodus befindet;
*Einstellen* (13050, 13060) einer UL-Datenanzeige, die angibt, ob die UL-Daten für die erste Zellengruppe oder die zweite Zellengruppe verfügbar sind; und
*Übertragen* (13070) der UL-Datenanzeige an einen Netzwerkknoten (1211, 1212).

2. Verfahren nach Anspruch 1, wobei die UL-Datenanzeige angibt, ob die Wiederaufnahme aufgrund der Uplink-Daten, die nur für die erste Zellengruppe verfügbar sind, initiiert wird, oder ob unabhängig von den für die erste Zellengruppe verfügbaren Uplink-Daten die Uplink-Daten für die zweite Zellengruppe verfügbar sind.

3. Verfahren nach Anspruch 1 oder 2, wobei das Einstellen (13050, 13060) einer UL-Datenanzeige, die angibt, ob die UL-Daten für die erste Zellengruppe oder die zweite Zellengruppe verfügbar sind, Folgendes umfasst:
Einstellen der UL-Datenanzeige basierend auf einem der Folgenden:
a) ob ein zweiter Zellengruppenträger Daten aufweist;
b) ob ein geteilter Träger Daten aufweist.

4. Verfahren nach Anspruch 3, ferner umfassend Einstellen der UL-Datenanzeige basierend darauf, ob eine Menge der UL-Daten, die für einen Träger verfügbar sind, einen Schwellenwert überschreitet.

5. Verfahren nach einem der Ansprüche 1-4, wobei das Einstellen (13050, 13060) einer UL-Datenanzeige, die angibt, ob die UL-Daten für die erste Zellengruppe oder die zweite Zellengruppe verfügbar sind, Folgendes umfasst:
*Überprüfen* (13020), ob der zweite Zellengruppenträger Daten aufweist;
wenn ein zweiter Zellengruppenträger Daten aufweist,
*Einstellen* (13060) der UL-Datenanzeige, die angibt, dass die UL-Daten für die zweite Zellengruppe (SCG) verfügbar sind;
wenn ein zweiter Zellengruppenträger keine Daten aufweist,
*Überprüfen* (13030), ob der geteilte Träger Daten aufweist;
wenn ein geteilter Träger keine Daten aufweist,
*Einstellen* (13050) der UL-Datenanzeige, die angibt, dass die UL-Daten für die erste Zellengruppe (MCG) verfügbar sind;
wenn ein geteilter Träger Daten aufweist,
*Überprüfen* (13040), ob eine Gesamtmenge der Daten für den geteilten Träger einen Schwellenwert für Daten für den geteilten Träger überschreitet;
wenn die Gesamtmenge der Daten für den geteilten Träger den Schwellenwert für Daten für den geteilten Träger überschreitet,
*Einstellen* (13060) der UL-Datenanzeige, die angibt, dass die UL-Daten für die zweite Zellengruppe (SCG) verfügbar sind;
wenn die Gesamtmenge der Daten für den geteilten Träger den Schwellenwert für Daten für den geteilten Träger nicht überschreitet,
*Einstellen* (13050) der UL-Datenanzeige, die angibt, dass die UL-Daten für die erste Zellengruppe (MCG) verfügbar sind.

6. Verfahren nach Anspruch 5, wobei das Überprüfen (13020), ob der zweite Zellengruppenträger Daten aufweist, Folgendes umfasst:
*Überprüfen,* ob eine Datenmenge für den zweiten Zellengruppenträger einen Schwellenwert für Daten für den zweiten Zellengruppenträger überschreitet;
*Bestimmen,* dass der zweite Zellengruppenträger Daten aufweist, wenn die Datenmenge für den zweiten Zellengruppenträger den Schwellenwert für Daten für den zweiten Zellengruppenträger überschreitet.

7. Verfahren nach Anspruch 5, wobei das Überprüfen (13020), ob der zweite Zellengruppenträger Daten aufweist, Folgendes umfasst:
*Berechnen* einer Summe der Datenmenge für alle ersten Zellengruppenträger;
*Berechnen* einer Summe der Datenmenge für alle zweiten Zellengruppenträger;
*Bestimmen,* dass der zweite Zellengruppenträger Daten aufweist, wenn die Summe der Datenmenge für alle zweiten Zellengruppenträger größer ist als die Summe der Datenmenge für alle ersten Zellengruppenträger oder wenn die Summe der Datenmenge für alle zweiten Zellengruppenträger die Summe der Datenmenge für alle ersten Zellengruppenträger plus einen Schwellenwert überschreitet.

8. Verfahren nach Anspruch 5, wobei das Überprüfen (13040), ob eine Gesamtmenge der Daten für den geteilten Träger einen Schwellenwert für Daten für den geteilten Träger überschreitet, Folgendes umfasst:
*Berechnen* einer Summe der Datenmenge für alle ersten Zellengruppenträger;
*Berechnen* einer Summe der Datenmenge für alle geteilten Träger;
*Bestimmen,* dass der geteilte Träger Daten aufweist, wenn die Summe der Datenmenge für alle geteilten Träger die Summe der Datenmenge für alle ersten Zellengruppenträger überschreitet oder wenn die Summe der Datenmenge für alle geteilten Träger die Summe der Datenmenge für alle ersten Zellengruppenträger plus einen Schwellenwert überschreitet.

9. Verfahren nach einem der Ansprüche 1-8, wobei die UL-Datenanzeige in einer Wiederaufnahmeanforderungsnachricht enthalten ist und/oder mit einer an den Netzwerkknoten (1211, 1212) zu übertragenden Wiederaufnahmeanforderungsnachricht gemultiplext wird.

10. Verfahren nach einem der Ansprüche 1-9, wobei die UL-Datenanzeige als eines der Folgenden übertragen oder angezeigt wird:
a) eine Wiederaufnahmeursache, die in einer Wiederaufnahmeanforderungsnachricht enthalten ist;
b) eine Präambel, die einer Präambelgruppe zugeordnet ist, und/oder eine spezifische Zeit-Frequenz-Ressource, die durch den Netzwerkknoten für die Kommunikationsvorrichtung (1230) zur Verwendung für die UL-Datenanzeige konfiguriert ist;
c) auf einen zweiten Zellengruppenträger abgebildete Daten, die durch den zweiten Zellengruppenträger zu übertragen sind;
d) eine Auswahl von Präambel(n) und/oder spezifische(n) Zeit-Frequenz-Ressource(n), die durch den Netzwerkknoten für die Kommunikationsvorrichtung (1230) zur Verwendung für verschiedene UL-Datenanzeigen konfiguriert sind;
e) eine Wiederaufnahmevollständigkeitsnachricht;
f) ein Informationselement in einer Wiederaufnahmevollständigkeitsnachricht;
g) eine Auswahl von Physical-Random-Access-Channel-, PRACH-, Ressourcen, die durch den Netzwerkknoten für die Kommunikationsvorrichtung (1230) zur Verwendung für die UL-Datenanzeige konfiguriert sind.

11. Verfahren, das in einer Kommunikationsvorrichtung (1230) durchgeführt wird, zum Handhaben eines Wiederaufnahmeverfahrens von einem Energiesparbetriebsmodus zu einem verbundenen Betriebsmodus, wobei die Kommunikationsvorrichtung mit Multi-Funk-Dual-Konnektivität, MR-DC, mit einer ersten Zellengruppe und einer zweiten Zellengruppe in einem drahtlosen Kommunikationsnetz (1200) konfiguriert ist, **dadurch gekennzeichnet, dass** das Verfahren Folgendes umfasst:
Überprüfen (17020), ob der zweite Zellengruppenträger Daten aufweist;
wenn der zweite Zellengruppenträger keine Daten aufweist,
Überprüfen (17030), ob der geteilte Träger Daten aufweist;
wenn der geteilte Träger Daten aufweist,
Überprüfen (17040), ob eine Gesamtmenge der Daten für den geteilten Träger einen Schwellenwert für Daten für den geteilten Träger überschreitet;
wenn die Gesamtmenge der Daten für den geteilten Träger den Schwellenwert für Daten für den geteilten Träger überschreitet,
Initiieren (17050) von Messungen für die zweite Zellengruppe.

12. Verfahren nach Anspruch 11, ferner umfassend Übertragen einer Anzeige an den Netzwerkknoten (1211, 1211) zum Angeben, ob sich die Kommunikationsvorrichtung (1230) als Teil oder im Anschluss an das Wiederaufnahmeverfahren vom Energiesparbetriebsmodus zum verbundenen Betriebsmodus in einer Abdeckung der zweiten Zellengruppe befindet.

13. Verfahren nach Anspruch 12, ferner umfassend Bestimmen, ob sich die Kommunikationsvorrichtung (1230) in der Abdeckung der zweiten Zellengruppe befindet, basierend darauf, ob ein beliebiger oder mehrere Messwerte für die Referenzsignal-Empfangsleistung, RSRP, die Referenzsignal-Empfangsqualität, RSRQ, das Signal-zu-Störungs-plus-Rausch-Verhältnis, SINR, für die zweite Zellengruppe über einem oder mehreren Schwellenwert(en) liegt/liegen.

14. Verfahren nach einem der Ansprüche 11-13, ferner umfassend Übertragen von Messergebnissen für die zweite Zellengruppe an den Netzwerkknoten (1211, 1211) in oder im Anschluss an das Wiederaufnahmeverfahren vom Energiesparbetriebsmodus zum verbundenen Betriebsmodus.

15. Verfahren nach den Ansprüchen 12 und 14, wobei die Anzeige, ob sich die Kommunikationsvorrichtung (1230) in einer Abdeckung der zweiten Zellengruppe befindet, und/oder die Messergebnisse für die zweite Zellengruppe an den Netzwerkknoten (1211, 1211) zusammen mit einer UL-Datenanzeige übertragen wird/werden.

16. Verfahren nach den Ansprüchen 12 und 14, wobei die Anzeige, ob sich die Kommunikationsvorrichtung (1230) in einer Abdeckung der zweiten Zellengruppe befindet, und/oder die Messergebnisse für die zweite Zellengruppe innerhalb einer Wiederaufnahmeanforderungsnachricht als ein oder mehrere separate Feld(er) oder unter Verwendung spezifischer Wiederaufnahmeverursachungswerte übertragen oder mit dieser gemultiplext wird/werden.

17. Verfahren nach den Ansprüchen 12 und 14, wobei die Anzeige, ob sich die Kommunikationsvorrichtung (1230) in einer Abdeckung der zweiten Zellengruppe befindet, und/oder die Messergebnisse für die zweite Zellengruppe innerhalb einer Wiederaufnahmevollständigkeitsnachricht oder in einer Unterstützungsinformationsnachricht, die als Teil oder nach dem Wiederaufnahmeverfahren gesendet wird, übertragen wird/werden.

18. Kommunikationsvorrichtung (1230), die dazu konfiguriert ist, das Verfahren nach einem der Ansprüche 1-17 durchzuführen.

19. Verfahren, das in einem Netzwerkknoten (1211, 1212) durchgeführt wird, zum Handhaben eines Wiederaufnahmeverfahrens für eine Kommunikationsvorrichtung (1230) von einem Energiesparbetriebsmodus zu einem verbundenen Betriebsmodus in einem drahtlosen Kommunikationsnetzwerk (1200), wobei die Kommunikationsvorrichtung mit Multi-Funk-Dual-Konnektivität, MR-DC, mit einer ersten Zellengruppe und einer zweiten Zellengruppe konfiguriert ist, **dadurch gekennzeichnet, dass** das Verfahren Folgendes umfasst:
*Empfangen* (18010, 19010) einer Uplink-, UL-, Datenanzeige oder einer Abdeckungsanzeige für die zweite Zellengruppe von der Kommunikationsvorrichtung (1230) während eines durch die Kommunikationsvorrichtung (1230) initiierten Wiederaufnahmeverfahrens, wobei die UL-Datenanzeige angibt, ob die UL-Daten für den ersten Zellengruppenträger oder den zweiten Zellengruppenträger verfügbar sind, und die Abdeckungsanzeige für die zweite Zellengruppe angibt, ob sich die Kommunikationsvorrichtung (1230) in einer Abdeckung der zweiten Zellengruppe befindet;
*Bestimmen* (18020, 19020) einer zweiten Zellengruppenkonfiguration für die Kommunikationsvorrichtung (1230) basierend auf der empfangenen UL-Datenanzeige oder Abdeckungsanzeige für die zweite Zellengruppe; und
*Konfigurieren* (18030, 19030) der Kommunikationsvorrichtung (1230) gemäß der bestimmten zweiten Zellengruppenkonfiguration.

20. Verfahren nach Anspruch 19, wobei das Konfigurieren (18030, 19030) der Kommunikationsvorrichtung (1230) durch Übertragen der bestimmten zweiten Zellengruppenkonfiguration in einer Wiederaufnahmenachricht oder in einer separaten Rekonfigurationsnachricht an die Kommunikationsvorrichtung (1230) durchgeführt wird.

21. Verfahren nach einem der Ansprüche 19-20, wobei das Bestimmen (18020) einer zweiten Zellengruppenkonfiguration für die Kommunikationsvorrichtung (1230) basierend auf der empfangenen UL-Datenanzeige eine oder mehrere der folgenden Aktionen umfasst:
a) Bestimmen, ob eine ausgesetzte zweite Zellengruppe wieder aufzunehmen ist, und wenn bestimmt wird, dass die ausgesetzte zweite Zellengruppe wieder aufzunehmen ist, Einstellen eines Betriebsmodus für die zweite Zellengruppe mit Deaktivierung oder Aktivierung;
b) Bestimmen, ob eine zweite Zellengruppe freizugeben ist, für den Fall, dass die Kommunikationsvorrichtung (1230) eine Wiederaufnahme versucht mit einer zweiten Zellengruppe konfiguriert ist;
c) Bestimmen, ob eine zweite Zellengruppe hinzuzufügen ist, für den Fall, dass die Kommunikationsvorrichtung (1230) eine Wiederaufnahme versucht nicht mit einer zweiten Zellengruppe konfiguriert ist, und, wenn bestimmt wird, dass eine zweite Zellengruppe hinzuzufügen ist, Einstellen eines Betriebsmodus für die zweite Zellengruppe mit Deaktivierung oder Aktivierung.

22. Verfahren nach einem der Ansprüche 19-21, ferner umfassend Konfigurieren, durch Systeminformationen oder eine spezielle Signalisierung, eines beliebigen oder einer Kombination der Folgenden:
a) eine Präambel oder eine Gruppe von Präambeln,
b) eine oder einen Satz spezifische(r) Zeit-Frequenz-Ressource(n),
c) einen Datenvolumen-Schwellenwert,
d) einen Satz von Physical-Random-Access-Channel-, PRACH-, Ressourcen für die Kommunikationsvorrichtung (1230) zur Verwendung für verschiedene UL-Datenanzeigen.

23. Verfahren nach einem der Ansprüche 19-22, wobei das Empfangen (18010, 19010) einer Uplink-, UL-, Datenanzeige oder einer Abdeckungsanzeige für die zweite Zellengruppe eines der Folgenden umfasst:
a) Empfangen einer UL-Datenanzeige oder einer Abdeckungsanzeige für die zweite Zellengruppe in einer Wiederaufnahmeanforderungsnachricht, die durch die Kommunikationsvorrichtung (1230) gesendet wird, wobei die UL-Datenanzeige ein Parameter ist, der in der Wiederaufnahmeanforderungsnachricht enthalten ist;
b) Empfangen einer UL-Datenanzeige als Wiederaufnahmeursache, wobei eine neue Wiederaufnahmeursache eingestellt wird, um anzugeben, dass das Wiederaufnahmeverfahren aufgrund einer bestimmten abgebildeten Datenmenge an einen zweiten Zellengruppenträger oder einen geteilten Träger ausgelöst wurde, die oberhalb eines Datenvolumen-Schwellenwerts liegt, oder eine neue Wiederaufnahmeursache eingestellt wird, um anzugeben, dass die Kommunikationsvorrichtung (1230) eine Menge an UL-Daten in einem Puffer oberhalb eines Datenvolumen-Schwellenwerts aufweist, unabhängig davon, dass diese zweiten Zellengruppenträgern zugeordnet sind, oder wenn die UL-Daten für einen zweiten Zellengruppenträger sind, eine bestehende Wiederaufnahmeursache auf einen Wert "mo-data" oder auf eine andere bestehende Wiederaufnahmeursache eingestellt wird;
c) Empfangen einer UL-Datenanzeige in einer Unterstützungsinformationsnachricht oder in einer mit einer Wiederaufnahmeanforderungsnachricht gemultiplexten Unterstützungsinformationsnachricht oder in einer Wiederaufnahmevollständigkeitsnachricht oder in einem Informationselement in einer Wiederaufnahmevollständigkeitsnachricht;
e) Empfangen einer UL-Datenanzeige in einer Präambel oder einer Gruppe von Präambeln oder in einer oder einem Satz von spezifischen Zeit-Frequenz-Ressource(n) oder Physical-Random-Access-Channel-, PRACH-, Ressourcen, wobei die Präambeln, die spezifische(n) Zeit-Frequenz-Ressource(n) oder PRACH-Ressourcen dazu konfiguriert sind, verschiedene UL-Datenanzeigen anzuzeigen.

24. Netzwerkknoten (1211, 1212), der dazu konfiguriert ist, das Verfahren nach einem der Ansprüche 19-23 durchzuführen.

## Revendications

1. Procédé exécuté dans un dispositif de communication (1230) pour gérer une procédure de reprise d'un mode de fonctionnement d'économie d'énergie à un mode de fonctionnement connecté, dans lequel le dispositif de communication (1230) est configuré avec une double connectivité multi-radio, MR-DC, avec un premier groupe de cellules et un second groupe de cellules dans un réseau de communication sans fil (1200), **caractérisé par** le procédé comprenant :
l'initiation (13010) d'une procédure de reprise lorsqu'il existe des données de liaison montante, UL, disponibles au niveau du dispositif de communication (1230) alors qu'il est dans le mode de fonctionnement d'économie d'énergie ;
le réglage (13050, 13060) d'une indication de données UL indiquant si les données UL sont disponibles pour le premier groupe de cellules ou le second groupe de cellules ; et
la transmission (13070) de l'indication de données UL à un nœud de réseau (1211, 1212).

2. Procédé selon la revendication 1, dans lequel l'indication de données UL indique si la reprise est initiée en raison des données de liaison montante qui sont disponibles uniquement pour le premier groupe de cellules, ou quelles que soient les données de liaison montante disponibles pour le premier groupe de cellules, les données de liaison montante sont disponibles pour le second groupe de cellules.

3. Procédé selon la revendication 1 ou 2, dans lequel le réglage (13050, 13060) d'une indication de données UL indiquant si les données UL sont disponibles pour le premier groupe de cellules ou le second groupe de cellules comprend :
le réglage de l'indication de données UL sur la base de l'un des éléments suivants :
a) si un support de second groupe de cellules a des données ;
b) si un support divisé a des données.

4. Procédé selon la revendication 3, comprenant en outre le réglage de l'indication de données UL sur la base du fait qu'une quantité de données UL disponibles pour un support dépasse un seuil.

5. Procédé selon l'une quelconque des revendications 1 à 4, dans lequel le réglage (13050, 13060) d'une indication de données UL indiquant si les données UL sont disponibles pour le premier groupe de cellules ou le second groupe de cellules comprend :
le fait de vérifier (13020) si le support de second groupe de cellules a des données ;
si un support de second groupe de cellules a des données,
le réglage (13060) de l'indication de données UL indiquant que les données UL sont disponibles pour le second groupe de cellules (SCG) ;
si un support de second groupe de cellules n'a pas de données,
le fait de vérifier (13030) si le support divisé a des données ;
si un support divisé n'a pas de données,
le réglage (13050) de l'indication de données UL indiquant que les données UL sont disponibles pour le premier groupe de cellules (MCG) ;
si un support divisé a des données,
le fait de vérifier (13040) si une quantité totale des données pour le support divisé dépasse un seuil de données de support divisé ;
si la quantité totale de données pour le support divisé dépasse le seuil de données de support divisé,
le réglage (13060) de l'indication de données UL indiquant que les données UL sont disponibles pour le second groupe de cellules (SCG) ;
si la quantité totale des données pour le support divisé ne dépasse pas le seuil de données de support divisé,
le réglage (13050) de l'indication de données UL indiquant que les données UL sont disponibles pour le premier groupe de cellules (MCG).

6. Procédé selon la revendication 5, dans lequel le fait de vérifier (13020) si le support de second groupe de cellules a des données comprend :
le fait de vérifier si une quantité de données pour le support de second groupe de cellules dépasse un seuil de données de support de second groupe de cellules ;
la détermination que le support de second groupe de cellules a des données si la quantité de données pour le support de second groupe de cellules dépasse le seuil de données de support de second groupe de cellules.

7. Procédé selon la revendication 5, dans lequel le fait de vérifier (13020) si le support de second groupe de cellules a des données comprend :
le calcul d'une somme de la quantité de données pour tous les supports de premier groupe de cellules ;
le calcul d'une somme de la quantité de données pour tous les supports de second groupe de cellules ;
la détermination que le support de second groupe de cellules a des données si la somme de la quantité de données pour tous les supports de second groupe de cellules est supérieure à la somme de la quantité de données pour tous les supports de premier groupe de cellules ou si la somme de la quantité de données pour tous les supports de second groupe de cellules dépasse la somme de la quantité de données pour tous les supports de premier groupe de cellules plus un seuil.

8. Procédé selon la revendication 5, dans lequel le fait de vérifier (13040) si une quantité totale des données pour le support divisé dépasse un seuil de données de support divisé comprend :
le calcul d'une somme de la quantité de données pour tous les supports de premier groupe de cellules ;
le calcul d'une somme de la quantité de données pour tous les supports divisés ;
la détermination que le support divisé a des données si la somme de la quantité de données pour tous les supports divisés dépasse la somme de la quantité de données pour tous les supports de premier groupe de cellules ou si la somme de la quantité de données pour tous les supports divisés dépasse la somme de la quantité de données pour tous les supports de premier groupe de cellules plus un seuil.

9. Procédé selon l'une quelconque des revendications 1 à 8, dans lequel l'indication de données UL est incluse dans un message de demande de reprise et/ou multiplexée avec un message de demande de reprise à transmettre au noeud de réseau (1211, 1212).

10. Procédé selon l'une quelconque des revendications 1 à 9, dans lequel l'indication de données UL est transmise ou indiquée comme l'un quelconque des éléments suivants :
a) une cause de reprise comprise dans un message de demande de reprise ;
b) un préambule associé à un groupe de préambules et/ou à une ressource temps-fréquence spécifique configurée par le noeud de réseau pour que le dispositif de communication (1230) l'utilise pour l'indication de données UL ;
c) des données mappées sur un support de second groupe de cellules à transmettre par le second groupe de cellules ;
d) une sélection de préambule(s) et/ou de ressource(s) temps-fréquence spécifique(s) configurée(s) par le noeud de réseau pour que le dispositif de communication (1230) les utilise pour différentes indications de données UL ;
e) un message de reprise terminée ;
f) un élément d'information dans un message de reprise terminée ;
g) une sélection de ressources de canal d'accès aléatoire physique, PRACH, configurées par le noeud de réseau pour que le dispositif de communication (1230) les utilise pour l'indication de données UL.

11. Procédé exécuté dans un dispositif de communication (1230) pour gérer une procédure de reprise d'un mode de fonctionnement d'économie d'énergie à un mode de fonctionnement connecté, dans lequel le dispositif de communication est configuré avec une double connectivité multi-radio, MR-DC, avec un premier groupe de cellules et un second groupe de cellules dans un réseau de communication sans fil (1200), **caractérisé par** le procédé comprenant :
le fait de vérifier (17020) si le support de second groupe de cellules a des données ;
si le support de second groupe de cellules n'a pas de données,
le fait de vérifier (17030) si le support divisé a des données ;
si le support divisé a des données,
le fait de vérifier (17040) si une quantité totale des données pour le support divisé dépasse un seuil de données de support divisé ;
si la quantité totale des données pour le support divisé dépasse le seuil de données de support divisé,
l'initiation (17050) de mesures pour le second groupe de cellules.

12. Procédé selon la revendication 11, comprenant en outre la transmission d'une indication au noeud de réseau (1211, 1211) pour indiquer si le dispositif de communication (1230) est dans une couverture du second groupe de cellules dans le cadre ou après la procédure de reprise du mode de fonctionnement d'économie d'énergie au mode de fonctionnement connecté.

13. Procédé selon la revendication 12, comprenant en outre le fait de déterminer si le dispositif de communication (1230) est dans la couverture du second groupe de cellules sur la base du fait qu'une ou plusieurs valeurs mesurées sur la puissance reçue du signal de référence, RSRP, la qualité reçue du signal de référence, RSRQ, le rapport signal sur interférence plus bruit, SINR, pour le second groupe de cellules est ou sont supérieures à une ou plusieurs valeurs seuil.

14. Procédé selon l'une quelconque des revendications 11 à 13, comprenant en outre la transmission de résultats de mesure pour le second groupe de cellules au noeud de réseau (1211, 1211) pendant ou après la procédure de reprise du mode de fonctionnement d'économie d'énergie au mode de fonctionnement connecté.

15. Procédé selon les revendications 12 et 14, dans lequel l'indication indiquant si le dispositif de communication (1230) se trouve dans une couverture du second groupe de cellules et/ou les résultats de mesure pour le second groupe de cellules est/sont transmis au noeud de réseau (1211, 1211) ainsi qu'une indication de données UL.

16. Procédé selon les revendications 12 et 14, dans lequel l'indication indiquant si le dispositif de communication (1230) se trouve dans une couverture du second groupe de cellules et/ou les résultats de mesure pour le second groupe de cellules est/sont transmis dans ou multiplexés avec un message de demande de reprise sous la forme d'un ou de plusieurs champs distincts ou à l'aide de valeurs de cause de reprise spécifiques.

17. Procédé selon les revendications 12 et 14, dans lequel l'indication indiquant si le dispositif de communication (1230) se trouve dans une couverture du second groupe de cellules et/ou les résultats de mesure pour le second groupe de cellules est/sont transmis dans un message de reprise terminée ou dans un message d'information d'assistance qui est envoyé dans le cadre ou après la procédure de reprise.

18. Dispositif de communication (1230) configuré pour exécuter le procédé selon l'une quelconque des revendications 1 à 17.

19. Procédé exécuté dans un noeud de réseau (1211, 1212) pour gérer une procédure de reprise pour un dispositif de communication (1230) d'un mode de fonctionnement d'économie d'énergie à un mode de fonctionnement connecté dans un réseau de communication sans fil (1200), dans lequel le dispositif de communication est configuré avec une double connectivité multi-radio, MR-DC, avec un premier groupe de cellules et un second groupe de cellules, **caractérisé par** le procédé comprenant :
la réception (18010, 19010) d'une indication de données de liaison montante, UL ou d'une indication de couverture de second groupe de cellules à partir du dispositif de communication (1230) pendant une procédure de reprise initiée par le dispositif de communication (1230), dans lequel l'indication de données UL indique si les données UL sont disponibles pour le support de premier groupe de cellules ou le support de second groupe de cellules et l'indication de couverture de second groupe de cellules indique si le dispositif de communication (1230) se trouve dans une couverture du second groupe de cellules ;
la détermination (18020, 19020) d'une configuration de second groupe de cellules pour le dispositif de communication (1230) sur la base de l'indication de données UL reçue ou de l'indication de couverture de second groupe de cellules ; et
la configuration (18030, 19030) du dispositif de communication (1230) selon la configuration de second groupe de cellules déterminée.

20. Procédé selon la revendication 19, dans lequel la configuration (18030, 19030) du dispositif de communication (1230) est exécutée en transmettant la configuration de second groupe de cellules déterminée dans un message de reprise ou dans un message de reconfiguration distinct au dispositif de communication (1230).

21. Procédé selon l'une quelconque des revendications 19 et 20, dans lequel la détermination (18020) d'une configuration de second groupe de cellules pour le dispositif de communication (1230) sur la base de l'indication de données UL reçue comprend une ou plusieurs des actions suivantes :
a) le fait de déterminer si un second groupe de cellules suspendu doit être repris, et s'il est déterminé que le second groupe de cellules suspendu doit être repris, le réglage d'un mode de fonctionnement pour le second groupe de cellules avec désactivé ou activé ;
b) le fait de déterminer si un second groupe de cellules doit être libéré dans le cas où le dispositif de communication (1230) tentant de reprendre est configuré avec un second groupe de cellules ;
c) le fait de déterminer si un second groupe de cellules doit être ajouté dans le cas où le dispositif de communication (1230) tentant de reprendre n'est pas configuré avec un second groupe de cellules, et, s'il est déterminé qu'un second groupe de cellules doit être ajouté, le réglage d'un mode de fonctionnement pour le second groupe de cellules avec désactivé ou activé.

22. Procédé selon l'une quelconque des revendications 19 à 21, comprend en outre la configuration, par des informations système ou une signalisation dédiée, de l'un quelconque ou d'une combinaison des éléments suivants :
a) un préambule ou un groupe de préambules,
b) une ou un ensemble de ressources temps-fréquence spécifiques,
c) un seuil de volume de données,
d) un ensemble de ressources de canal d'accès aléatoire physique, PRACH, pour que le dispositif de communication (1230) les utilise pour différentes indications de données UL.

23. Procédé selon l'une quelconque des revendications 19 à 22, dans lequel la réception (18010, 19010) d'une indication de données de liaison montante, UL, ou d'une indication de couverture de second groupe de cellules comprend l'un quelconque des éléments suivants :
a) la réception d'une indication de données UL ou d'une indication de couverture de second groupe de cellules dans un message de demande de reprise envoyé par le dispositif de communication (1230), dans lequel l'indication de données UL est un paramètre compris dans le message de demande de reprise ;
b) la réception d'une indication de données UL en tant que cause de reprise, dans lequel une nouvelle cause de reprise est réglée pour indiquer que la procédure de reprise a été déclenchée en raison d'une certaine quantité de données mappées sur un support de second groupe de cellules ou un support divisé se trouvant au-dessus d'un seuil de volume de données, ou une nouvelle cause de reprise est réglée pour indiquer que le dispositif de communication (1230) a une quantité de données UL dans la mémoire tampon supérieure à un seuil de volume de données indépendamment de celles associées aux supports de second groupe de cellules, ou lorsque les données UL sont destinées à un support de second groupe de cellules, une cause de reprise existante est réglée sur une valeur « mo-data » ou sur une autre cause de reprise existante ;
c) la réception d'une indication de données UL dans un message d'informations d'assistance ou dans un message d'informations d'assistance multiplexé avec un message de demande de reprise, ou dans un message de reprise terminée, ou dans un élément d'information dans un message de reprise terminée ;
e) la réception d'une indication de données UL dans un préambule ou un groupe de préambules, ou dans une ou un ensemble de ressources temps-fréquence spécifiques ou ressources de canal d'accès aléatoire physique, PRACH, dans lequel les préambules étant, la ou les ressources temps-fréquence spécifiques ou ressources PRACH sont configurées pour indiquer différentes indications de données UL.

24. Noeud de réseau (1211, 1212), configuré pour exécuter le procédé selon l'une quelconque des revendications 19 à 23.
